# EUROPEAN PATENT APPLICATION

(11) **EP 4 159 554 A1**
(43) Date of publication of application: **05.04.2023**
(21) Application number: 21829234.0
(22) Date of filing: 16.06.2021
(51) Int. Cl.: B60R 25/20, G10L 15/00

(54) **APPARATUS CONTROL METHOD AND COMPUTER-READABLE STORAGE MEDIUM**

(30) Priority: 24.06.2020 CN 202010591544
(71) Applicant: Huawei Technologies Co., Ltd., Longgang District, Shenzhen, Guangdong 518129 (CN)
(72) Inventor: ZHOU, Mi, Shenzhen, Guangdong 518129 (CN); YU, Jingjing, Shenzhen, Guangdong 518129 (CN)
(74) Representative: Thun, Clemens
(86) International application number: PCT/CN2021/100361
(87) International publication number: WO 2021/259103

(57) **Abstract**

A device control method and a computer-readable storage medium are provided. The device control method includes: A first device receives a voice of a user and obtains voiceprint information of the user, and the first device obtains, from the voice through parsing, control information included in the voice. The first device matches the voiceprint information with voiceprint information preset in the first device, to perform user identity authentication. The first device determines that the user identity authentication succeeds, and sends the control information to a second device. The second device receives the control information by using a communications unit, and the communications unit forwards the control information to a control unit of the second device. The control unit of the second device controls the second device to perform an operation corresponding to the control information. According to the device control method, the user identity authentication is performed based on the preset voiceprint information, and after the user authentication succeeds, the user is authorized to control a device, to improve device control security.

## Description

This application claims priority to Chinese Patent Application No. 202010591544.5, filed with the China National Intellectual Property Administration on June 24, 2020 and entitled "DEVICE CONTROL METHOD AND COMPUTER-READABLE STORAGE MEDIUM", which is incorporated herein by reference in its entirety.

### TECHNICAL FIELD

This application relates to the field of electronic devices, and in particular, to a device control method and a computer-readable storage medium.

### BACKGROUND

As a personal belonging, a vehicle includes a lot of basic information such as personal entertainment and driving behavior. If the vehicle is stolen illegally, unnecessary trouble may be brought, and even consequences are unimaginable. Therefore, private information security and vehicle safety become particularly important. A vehicle key is an important part to ensure vehicle safety. To improve vehicle safety, many vehicle manufacturers focus on improving safety of the vehicle key. In a current market, a vehicle is unlocked mainly by using a mechanical key, a remote control key, or the like. Any person may unlock the vehicle provided that the person obtains a key (such as the mechanical key or the remote control key), to start the vehicle and drive away. Therefore, a serious security risk exists.

Some vehicle manufacturers provide a Bluetooth key solution, to further improve vehicle unlocking security. Frequently-used networking of a Bluetooth key system includes a mobile app, a vehicle-mounted T-Box, a vehicle, a carrier network, and a Bluetooth key service. The Bluetooth key service mainly provides key management, and provides services such as a key, key revocation, and key update for the mobile app and vehicle-mounted T-Box.

After purchasing a new vehicle, a vehicle owner needs to first download a corresponding Bluetooth key mobile app, complete related account registration in a mobile phone interface, and complete vehicle binding based on an indication. After the vehicle binding is completed, the mobile app initiates an application for activating a Bluetooth key to a Bluetooth key service center. The Bluetooth key service center separately generates a security key and a vehicle owner authentication key for the vehicle-mounted T-Box and the mobile phone, and distributes the security key and the vehicle owner authentication key to the vehicle-mounted T-Box and the mobile phone.

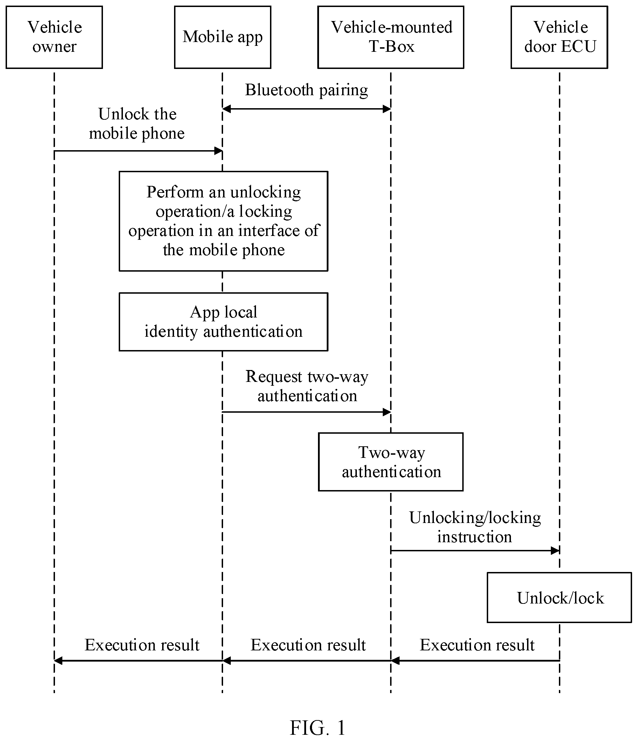

As shown in FIG. 1, when a vehicle owner completes daily use such as vehicle unlocking/locking by using a Bluetooth key mobile app, the following procedure is used: First, a mobile phone and a vehicle-mounted T-Box perform Bluetooth pairing. After the mobile phone and the vehicle-mounted T-Box complete the Bluetooth pairing, the vehicle owner unlocks the mobile phone, and enters a password in an interface of the Bluetooth key mobile app to perform an unlocking operation or a locking operation. The Bluetooth key mobile app first performs local authentication on an identity of the vehicle owner. After the authentication on the identity of the vehicle owner succeeds, the mobile phone completes two-way authentication with the vehicle-mounted T-Box on the vehicle. After the two-way authentication succeeds, the vehicle-mounted T-Box controls a vehicle door ECU to perform the unlocking operation or the locking operation. In this way, the vehicle owner can unlock or lock the vehicle by using the mobile phone without using a mechanical key or a conventional remote control key.

However, usually, a mobile phone supports digital or graphic unlocking. Once a vehicle owner loses the mobile phone, after cracking an unlock password of the mobile phone of the vehicle owner, another person may steal the mobile phone of the vehicle owner to unlock the vehicle, which poses a security risk.

### SUMMARY

Embodiments of this application provide a device control method and a computer-readable storage medium, so that voiceprint information of a user who uses a device can be obtained, and authentication can be performed on an identity of the user based on the voiceprint information, to improve device control security.

To achieve the foregoing objectives, the following technical solutions are used in embodiments of this application.

According to a first aspect, an embodiment of this application discloses a device control method. The method is applied to a system including a first device and a second device that are communicatively connected, the second device includes a communications unit and a control unit, and the method includes the following steps:

The first device receives a voice of a user and obtains voiceprint information of the user, where the voiceprint information includes but is not limited to bone voiceprint information, and the first device obtains, from the voice through parsing, control information included in the voice.

The first device matches the voiceprint information with voiceprint information preset in the first device, to perform user identity authentication, that is, the first device is used as an authentication center and performs the user identity authentication in the first device.

The first device determines that the user identity authentication succeeds, and sends the control information to the second device.

The second device receives the control information by using the communications unit, and the communications unit forwards the control information to the control unit of the second device.

The control unit of the second device controls the second device to perform an operation corresponding to the control information.

According to this implementation of this application, when the device is used, the first device performs the user identity authentication based on the preset voiceprint information, and after determining that the user authentication succeeds, the first device authorizes the user to control the device. Security authentication is implemented based on the voiceprint information of the user. The voiceprint information is similar to DNA, a fingerprint, and a palm print. Voiceprint information of each person is unique, and can improve device control security.

In a possible implementation of the first aspect, the first device is a Bluetooth headset or a mobile terminal, where the mobile terminal is, for example, a mobile phone, and the second device is a vehicle; and in the second device, the communications unit is a vehicle-mounted T-Box, and the control unit is a vehicle ECU.

For example, when the first device is the Bluetooth headset, when using the vehicle, the user says "Please unlock the vehicle" by using the Bluetooth headset, the Bluetooth headset obtains the voice and voiceprint information of the user, and obtains, from the voice through parsing, control information included in the voice: vehicle unlocking. The Bluetooth headset matches voiceprint information preset in the Bluetooth headset with the obtained voiceprint information, to perform user identity authentication. After determining that the user identity authentication succeeds, the Bluetooth headset sends the control information of "vehicle unlocking" to the vehicle. After the vehicle receives the control information by using the vehicle-mounted T-Box, the vehicle-mounted T-Box forwards the control information to the vehicle ECU, and the vehicle ECU may control the vehicle to perform a vehicle unlocking operation.

In a possible implementation of the first aspect, the first device includes a Bluetooth headset and a mobile terminal communicatively connected to the Bluetooth headset, where the mobile terminal is, for example, a mobile phone, and the second device is a vehicle; and in the second device, the communications unit is a vehicle-mounted T-Box, and the control unit is a vehicle ECU.

In a possible implementation of the first aspect, the Bluetooth headset included in the first device receives the voice of the user, and obtains, from the voice through parsing, the control information included in the voice.

The Bluetooth headset matches the obtained voiceprint information of the user with the voiceprint information preset in the Bluetooth headset, to perform the user identity authentication.

The Bluetooth headset determines that the user identity authentication succeeds, and sends the control information to the mobile terminal, and the mobile terminal forwards the control information to the second device. That is, the mobile terminal is used as a data forwarding unit between the Bluetooth headset and the vehicle, and the Bluetooth headset forwards the control information to the vehicle by using the mobile terminal.

In a possible implementation of the first aspect, the operation performed by the second device based on the control information includes: vehicle unlocking, vehicle locking, vehicle startup, vehicle window opening, vehicle window closing, air conditioner on, air conditioner off, seat height raising, seat height descending, trunk opening, and trunk closing. It should be noted that this application is not limited to these vehicle control operations.

In a possible implementation of the first aspect, when the voiceprint information matches the voiceprint information preset in the first device, the first device determines that the user identity authentication succeeds, where the matching means that a similarity between the voiceprint information and the voiceprint information preset in the first device is greater than a specified threshold. A specific value of the specified threshold may be set and selected based on a requirement, for example, a specified threshold such as 95%, 97%, or 99%.

According to a second aspect, an embodiment of this application discloses a device control method. The method is applied to a system including a first device, a second device, and a third device remotely communicatively connected to the first device and the second device, the second device includes a communications unit and a control unit, and the method includes:

The first device receives a voice of a user, obtains voiceprint information of the user, where the voiceprint information includes but is not limited to bone voiceprint information, and transmits the voiceprint information to the third device, and the first device obtains, from the voice through parsing, control information included in the voice.

The third device receives the voiceprint information, and matches the voiceprint information with voiceprint information preset in the third device, to perform user identity authentication, that is, the third device is used as an authentication center and performs the user identity authentication in the third device.

The third device determines that the user identity authentication succeeds, and the second device receives the control information.

The second device receives the control information by using the communications unit, and the communications unit forwards the control information to the control unit of the second device.

The control unit of the second device controls the second device to perform an operation corresponding to the control information.

According to this implementation of this application, when the device is used, the third device performs the user identity authentication based on the preset voiceprint information, and after determining that the user authentication succeeds, the third device authorizes the user to control the device. Security authentication is implemented based on the voiceprint information of the user. The voiceprint information is similar to DNA, a fingerprint, and a palm print. Voiceprint information of each person is unique, and can improve device control security.

In a possible implementation of the second aspect, the first device is a Bluetooth headset or a mobile terminal, where the mobile terminal is, for example, a mobile phone, the second device is a vehicle, and the third device is a cloud server, and in the second device, the communications unit is a vehicle-mounted T-Box, and the control unit is a vehicle ECU.

For example, when the first device is the Bluetooth headset, when using the vehicle, the user says "Please unlock the vehicle" by using the Bluetooth headset, the Bluetooth headset obtains the voice and voiceprint information of the user, and obtains, from the voice through parsing, control information included in the voice: vehicle unlocking. The Bluetooth headset transmits the voiceprint information to the cloud server, and the cloud server matches voiceprint information preset in the cloud server with the obtained voiceprint information, to perform user identity authentication. After the cloud server determines that the user identity authentication succeeds, the vehicle receives the control information of "vehicle unlocking". After the vehicle receives the control information by using the vehicle-mounted T-Box, the vehicle-mounted T-Box forwards the control information to the vehicle ECU, and the vehicle ECU may control the vehicle to perform a vehicle unlocking operation.

Voiceprint information of a vehicle owner is stored in the cloud. In this case, even if the vehicle owner does not bring a headset, the vehicle owner can use a headset that is of another person and that can collect a voiceprint to unlock the vehicle. In addition, the voiceprint information of the vehicle owner or voiceprint information a friend of the vehicle owner may be further stored in the cloud, to implement vehicle sharing. In addition, based on strong computing power of the cloud server, accuracy of voice recognition for the user is ensured, and user experience of controlling the vehicle through voice is improved.

In a possible implementation of the second aspect, the Bluetooth headset or the mobile terminal receives the voice of the user, the Bluetooth headset or the mobile terminal obtains, from the voice through parsing, the control information included in the voice, and the Bluetooth headset or the mobile terminal transmits the voiceprint information and the control information to the second device.

The second device receives the voiceprint information and the control information by using the vehicle-mounted T-Box, and the vehicle-mounted T-Box forwards the voiceprint information and the control information to the cloud server.

The cloud server matches the voiceprint information with the voiceprint information preset in the cloud server, to perform the user identity authentication.

The cloud server determines that the user identity authentication succeeds, and sends the control information to the second device.

In a possible implementation of the second aspect, the Bluetooth headset or the mobile terminal receives the voice of the user, the Bluetooth headset or the mobile terminal obtains, from the voice through parsing, the control information included in the voice, and the Bluetooth headset or the mobile terminal transmits the voiceprint information to the second device. The second device receives the voiceprint information by using the vehicle-mounted T-Box, and the vehicle-mounted T-Box forwards the voiceprint information to the cloud server. The cloud server matches the voiceprint information with the voiceprint information preset in the cloud server, to perform the user identity authentication. The cloud server determines that the user identity authentication succeeds, and the Bluetooth headset or the mobile terminal sends the control information to the second device.

In a possible implementation of the second aspect, the first device includes a Bluetooth headset and a mobile terminal communicatively connected to the Bluetooth headset, where the mobile terminal is, for example, a mobile phone, the second device is a vehicle, and the third device is a cloud server, and in the second device, the communications unit is a vehicle-mounted T-Box, and the control unit is a vehicle ECU.

In a possible implementation of the second aspect, the Bluetooth headset included in the first device receives the voice of the user and obtains, from the voice through parsing, the control information included in the voice, and the Bluetooth headset transmits the voiceprint information and the control information to the mobile terminal. The mobile terminal forwards the voiceprint information and the control information to the cloud server, and the mobile terminal is used as a data forwarding unit between the Bluetooth headset and the cloud server. The cloud server matches the voiceprint information with the voiceprint information preset in the cloud server, to perform the user identity authentication. The cloud server determines that the user identity authentication succeeds, and sends the control information to the second device.

In a possible implementation of the second aspect, the Bluetooth headset included in the first device receives the voice of the user and obtains, from the voice through parsing, the control information included in the voice, and the Bluetooth headset transmits the voiceprint information and the control information to the mobile terminal. The mobile terminal forwards the voiceprint information and the control information to the second device. The second device receives the voiceprint information and the control information by using the vehicle-mounted T-Box, and the vehicle-mounted T-Box forwards the voiceprint information and the control information to the cloud server. The cloud server matches the voiceprint information with the voiceprint information preset in the cloud server, to perform the user identity authentication. The cloud server determines that the user identity authentication succeeds, and sends the control information to the second device.

In a possible implementation of the second aspect, the Bluetooth headset included in the first device receives the voice of the user and obtains, from the voice through parsing, the control information included in the voice, and the Bluetooth headset transmits the voiceprint information and the control information to the mobile terminal. The mobile terminal forwards the voiceprint information to the cloud server. The cloud server matches the voiceprint information with the voiceprint information preset in the cloud server, to perform the user identity authentication. The cloud server determines that the user identity authentication succeeds, and the mobile terminal sends the control information to the second device.

In a possible implementation of the second aspect, the Bluetooth headset included in the first device receives the voice of the user and obtains, from the voice through parsing, the control information included in the voice, and the Bluetooth headset transmits the voiceprint information and the control information to the mobile terminal. The mobile terminal forwards the voiceprint information to the second device. The second device receives the voiceprint information by using the vehicle-mounted T-Box, and the vehicle-mounted T-Box forwards the voiceprint information to the cloud server. The cloud server matches the voiceprint information with the voiceprint information preset in the cloud server, to perform the user identity authentication. The cloud server determines that the user identity authentication succeeds, and the mobile terminal sends the control information to the second device.

In a possible implementation of the second aspect, the Bluetooth headset included in the first device receives the voice of the user and obtains, from the voice through parsing, the control information included in the voice, and the Bluetooth headset transmits the voiceprint information and the control information to the mobile terminal. The mobile terminal forwards the voiceprint information to the cloud server, and the mobile terminal forwards the control information to the second device. The second device receives the control information by using the vehicle-mounted T-Box, and the vehicle-mounted T-Box forwards the control information to the cloud server. The cloud server matches the voiceprint information with the voiceprint information preset in the cloud server, to perform the user identity authentication. The cloud server determines that the user identity authentication succeeds, and sends the control information to the second device.

In a possible implementation of the second aspect, the operation performed by the second device based on the control information includes: vehicle unlocking, vehicle locking, vehicle startup, vehicle window opening, vehicle window closing, air conditioner on, air conditioner off, seat height raising, seat height descending, trunk opening, and trunk closing.

In a possible implementation of the second aspect, when the voiceprint information included in the voice matches the voiceprint information preset in the third device, the third device determines that the user identity authentication succeeds, where the matching means that a similarity between the voiceprint information and the voiceprint information preset in the third device is greater than a specified threshold. A specific value of the specified threshold may be set and selected based on a requirement, for example, a specified value such as 95%, 97%, or 99%.

According to a third aspect, an embodiment of this application discloses a device control method. The method is applied to a first device, and the method includes the following steps:

The first device receives a voice of a user and obtains voiceprint information of the user, and the first device obtains, from the voice through parsing, control information included in the voice.

The first device matches the voiceprint information with voiceprint information preset in the first device, to perform user identity authentication.

The first device determines that the user identity authentication succeeds, and generates and sends the control information used to control a second device.

Under an indication of the control information, the second device may perform a corresponding operation.

According to a fourth aspect, an embodiment of this application discloses a device control method. The method is applied to a second device, the second device includes a communications unit and a control unit, and the method includes: The second device receives control information by using the communications unit, and the communications unit forwards the control information to the control unit of the second device, where
the control information comes from a first device, and is control information that is included in a voice and that is obtained from the received voice of a user through parsing after voiceprint information of the user that is obtained by the first device matches preset voiceprint information to determine that authentication succeeds.

The control unit of the second device controls the second device to perform an operation corresponding to the control information.

According to a fifth aspect, an embodiment of this application discloses a device control method. The method is applied to a third device, and the method includes the following steps:

The third device receives voiceprint information from a first device.

The third device matches the voiceprint information with voiceprint information preset in the third device, to perform user identity authentication.

After determining that the user identity authentication succeeds, the third device triggers an operation of sending control information to a second device, where the control information comes from the first device, is used to control the second device, and is control information that is included in a voice and that is obtained by the first device from the received voice of a user through parsing.

The control information may be sent to the second device in a plurality of manners. The control information may be sent by the first device to the third device, and then forwarded by the third device to the second device. Alternatively, the control information may be sent by the first device to the second device, forwarded by the second device to the third device, and then sent by the third device to the second device. Alternatively, the control information may be directly sent by the first device to the second device.

According to a sixth aspect, an implementation of this application provides a device control system, including a first device and a second device communicatively connected to the first device. The first device includes a voice pickup module, a voiceprint collection module, a voice recognition module, a storage module, a user authentication module, and a main control module. The second device includes a communications module and a control module. In the first device, the voice pickup module is configured to receive a voice of a user; the voiceprint collection module is configured to obtain voiceprint information of the user; the voice recognition module is configured to obtain, from the voice of the user through parsing, control information included in the voice; the storage module is configured to store voiceprint information of a vehicle owner and data of the user; the user authentication module is configured to match the voiceprint information with voiceprint information preset in the storage module, to perform user identity authentication; and the main control module is configured to send the control information to the communications module of the second device. In the second device, the communications module is configured to: receive the control information and forward the control information to the control module; and the control module is configured to: receive the control information, and control the second device to perform an operation corresponding to the control information.

According to a seventh aspect, an implementation of this application provides a device control system, including a first device, a second device, and a third device remotely communicatively connected to the first device and the second device. The first device includes a voice pickup module, a voiceprint collection module, a voice recognition module, and a main control module. The second device includes a communications module and a control module. The third device includes a storage module and a user authentication module. In the first device, the voice pickup module is configured to receive a voice of a user; the voiceprint collection module is configured to: obtain voiceprint information of the user, and send the voiceprint information to the user authentication module of the third device; the voice recognition module is configured to obtain, from the voice of the user through parsing, control information included in the voice; and the main control module is configured to send the control information to the communications module of the second device. In the third device, the storage module is configured to store voiceprint information of a vehicle owner and data of the user; and the user authentication module is configured to match the received voiceprint information with voiceprint information preset in the storage module, to perform user identity authentication. In the second device, the communications module is configured to: receive the control information, and forward the control information to the control module; and the control module is configured to: receive the control information, and control the second device to perform an operation corresponding to the control information.

According to an eighth aspect, an implementation of this application provides a first device. The first device includes a voice pickup module, a voiceprint collection module, a voice recognition module, a storage module, a user authentication module, and a main control module. In the first device, the voice pickup module is configured to receive a voice of a user; the voiceprint collection module is configured to obtain voiceprint information of the user; the voice recognition module is configured to obtain, from the voice of the user through parsing, control information included in the voice; the storage module is configured to store voiceprint information of a vehicle owner and data of the user; the user authentication module is configured to match the voiceprint information with voiceprint information preset in the storage module, to perform user identity authentication; and the main control module is configured to send, to the communications module of the second device, the control information used to control the second device.

According to a ninth aspect, an implementation of this application provides a second device. The second device includes a communications module and a control module. In the second device, the communications module is configured to receive control information, where the control information comes from a first device, and is control information that is included in a voice and that is obtained by the first device from the voice through parsing after the first device receives the voice of a user and obtains voiceprint information of the user. The first device matches the voiceprint information with voiceprint information preset in the first device, and sends the control information to the communications module after determining that user identity authentication succeeds, and the communications module forwards the control information to the control module. The control module is configured to: receive the control information and control the second device to perform an operation corresponding to the control information.

According to a tenth aspect, an implementation of this application provides a third device. The third device includes a storage module and a user authentication module. In the third device, the storage module is configured to store voiceprint information of a vehicle owner and data of a user; and the user authentication module is configured to: receive voiceprint information from a first device, and match the received voiceprint information with voiceprint information preset in the storage module, to perform user identity authentication. After determining that the user identity authentication succeeds, the user authentication module triggers control information to be sent to a second device, where the control information comes from the first device, is used to control the second device, and is control information that is included in the voice and that is obtained by the first device from the voice through parsing after the first device receives the voice of the user and obtains the voiceprint information of the user.

According to a tenth aspect, an implementation of this application provides a first device. The first device includes a processor and a memory. The memory is configured to store voiceprint information of a vehicle owner and data of a user, and includes instructions. When the instructions are implemented by the processor, the following method can be implemented: The first device receives a voice of the user and obtains voiceprint information of the user, and the first device obtains, from the voice through parsing, control information included in the voice. The first device matches the voiceprint information with voiceprint information preset in the first device, to perform user identity authentication. The first device determines that the user identity authentication succeeds, and generates and sends the control information used to control a second device. Under an indication of the control information, the second device may perform a corresponding operation.

According to an eleventh aspect, an implementation of this application provides a second device. The second device includes a processor and a memory. The memory includes instructions, and when the instructions are implemented by the processor, the following method can be implemented: The second device receives control information by using a communications unit, and the communications unit forwards the control information to a control unit of the second device, where the control information comes from a first device, and is control information that is included in a voice and that is obtained from the received voice of a user through parsing after voiceprint information of the user that is obtained by the first device matches preset voiceprint information to determine that authentication succeeds. The control unit of the second device controls the second device to perform an operation corresponding to the control information.

According to a twelfth aspect, an implementation of this application provides a third device. The third device includes a processor and a memory. The memory is configured to store voiceprint information of a vehicle owner and data of a user, and includes instructions. When the instructions are implemented by the processor, the following method can be implemented: The third device receives voiceprint information from a first device. The third device matches the voiceprint information with voiceprint information preset in the third device, to perform user identity authentication. After determining that the user identity authentication succeeds, the third device triggers an operation of sending control information to a second device, where the control information comes from the first device, is used to control the second device, and is control information that is included in a voice and that is obtained by the first device from the received voice of the user through parsing.

The control information may be sent to the second device in a plurality of manners. The control information may be sent by the first device to the third device, and then forwarded by the third device to the second device. Alternatively, the control information may be sent by the first device to the second device, forwarded by the second device to the third device, and then sent by the third device to the second device. Alternatively, the control information may be directly sent by the first device to the second device.

According to a twelfth aspect, an implementation of this application provides a device control system, including a first device and a second device communicatively connected to the first device. The first device includes a processor and a memory. The memory is configured to store voiceprint information of a vehicle owner and data of a user, and includes instructions. When the instructions are implemented by the processor, the following functions can be implemented: a voice pickup function, configured to receive a voice of the user; a voiceprint collection function, configured to: obtain voiceprint information of the user, and send the voiceprint information to a user authentication module of a third device; a voice recognition function, configured to obtain, from the voice of the user through parsing, control information included in the voice; a user authentication function, configured to match the received voiceprint information with voiceprint information preset in a storage module, to perform user identity authentication; and a main control function, configured to send the control information to a communication module of the second device. The second device includes a processor and a memory. The memory includes instructions. When the instructions are implemented, the following functions can be implemented: a communication function, configured to: receive the control information and forward the control information to a control module; and a control function, configured to: receive the control information, and control the second device to perform an operation corresponding to the control information.

According to a thirteenth aspect, an implementation of this application provides a device control system, including a first device, a second device, and a third device remotely communicatively connected to the first device and the second device. The first device includes a processor and a memory. The memory includes instructions. When the instructions are implemented by the processor, the following functions can be implemented: a voice pickup function, configured to receive a voice of a user; a voiceprint collection function, configured to: obtain voiceprint information of the user, and send the voiceprint information to a user authentication module of the third device; a voice recognition function, configured to obtain, from the voice of the user through parsing, control information included in the voice; and a main control function, configured to send, to a communications module of the second device, the control information used to control the second device.

The second device includes a processor and a memory. The memory includes instructions. When the instructions are implemented by the processor, the following functions can be implemented: a communication function, configured to: receive the control information and forward the control information to a control module; and a control function, configured to: receive the control information, and control the second device to perform an operation corresponding to the control information.

The third device includes a processor and a memory. The memory is configured to store voiceprint information of a vehicle owner and data of a user, and includes instructions. When the instructions are implemented by the processor, the following functions can be implemented: a user authentication function, configured to: match the received voiceprint information with voiceprint information preset in the memory, to perform user identity authentication; and after determining that the user identity authentication succeeds, trigger the control information to be sent to the second device.

According to a fourteenth aspect, an embodiment of this application provides a computer-readable storage medium. The computer-readable storage medium stores instructions, and when the instructions are executed on a computer, the computer is enabled to perform the method according to the first aspect to the fifth aspect.

### BRIEF DESCRIPTION OF DRAWINGS

FIG. 1 is a flowchart of implementing vehicle unlocking/locking by using a Bluetooth key according to the conventional technology;
FIG. 2 is a diagram of a scenario in which a Bluetooth headset, a mobile phone, a cloud server, and a vehicle implement vehicle control according to some embodiments of this application;
FIG. 3 is a schematic diagram of a structure of an electronic device according to an implementation of this application;
FIG. 4 is a schematic diagram of a structure of a headset device according to an implementation of this application;
FIG. 5 is a schematic diagram of a structure of a cloud server according to an implementation of this application;
FIG. 6 is a schematic diagram of a structure of a vehicle according to an implementation of this application;
FIG. 7 is a flowchart 1 of recording voiceprint information of a vehicle owner according to an embodiment of this application;
FIG. 8A to FIG. 8C are a flowchart 1 of a vehicle control method according to an embodiment of this application;
FIG. 9A to FIG. 9C are a flowchart 2 of a vehicle control method according to an embodiment of this application;
FIG. 10 A to FIG. 10C are a flowchart 3 of a vehicle control method according to an embodiment of this application;
FIG. 11A to FIG. 11C are a flowchart 4 of a vehicle control method according to an embodiment of this application;
FIG. 12A to FIG. 12C are a flowchart 5 of a vehicle control method according to an embodiment of this application;
FIG. 13 is a diagram of a scenario in which a Bluetooth headset, a cloud server, and a vehicle implement vehicle control according to some embodiments of this application;
FIG. 14A and FIG. 14B are a flowchart 6 of a vehicle control method according to an embodiment of this application;
FIG. 15A and FIG. 15B are a flowchart 7 of a vehicle control method according to an embodiment of this application;
FIG. 16 is a diagram of a scenario in which a Bluetooth headset, a mobile phone, and a vehicle implement vehicle control according to some embodiments of this application;
FIG. 17 is a flowchart 2 of recording voiceprint information of a vehicle owner according to an embodiment of this application;
FIG. 18A and FIG. 18B are a flowchart 8 of a vehicle control method according to an embodiment of this application;
FIG. 19 is a diagram of a scenario in which a Bluetooth headset and a vehicle implement vehicle control according to some embodiments of this application;
FIG. 20 is a flowchart 9 of a vehicle control method according to an embodiment of this application;
FIG. 21 is a block diagram of an electronic device according to an embodiment of this application; and
FIG. 22 is a block diagram of a system-on-a-chip (SoC) according to an embodiment of this application.

### DESCRIPTION OF EMBODIMENTS

The following describes specific implementations of this application in detail with reference to accompanying drawings.

### Embodiment 1

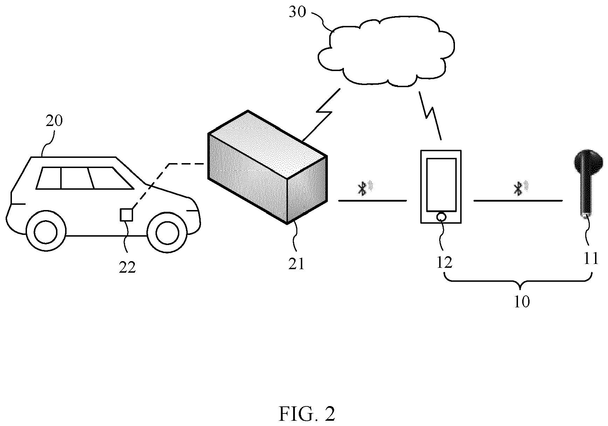

Refer to FIG. 2. A device control method provided in this embodiment is applied to a system including a Bluetooth headset 11 and a mobile phone 12 (the two devices may be collectively referred to as a terminal device 10), a vehicle 20, and a cloud server 30 remotely communicatively connected to the terminal device 10 and the vehicle 20. The vehicle 20 includes a vehicle-mounted T-Box 21 used as a communications unit, and a vehicle ECU 22 used as a control unit.

The terminal device 10 includes the Bluetooth headset 11 used as a voice pickup device and the mobile phone 12 that is used as a body of a mobile terminal and that is communicatively connected to the Bluetooth headset 11 through Bluetooth. The mobile phone 12 establishes a Bluetooth communication connection to the vehicle-mounted T-Box 21. The cloud server 30 is communicatively connected to the vehicle-mounted T-Box 21 through wireless communication. After receiving a signal and instructions transmitted from the outside, the vehicle-mounted T-Box 21 sends the signal and the instructions to the vehicle ECU 22.

An implementation of this application provides a device control method. After authentication is performed on a user identity based on voiceprint information of a user of the terminal device 10, the vehicle 20 used as a controlled end is controlled, to improve device control security.

In a scenario shown in FIG. 2, an example in which the mobile phone 12 is used as a body of the mobile terminal is provided. However, this application is not limited thereto. The body of the mobile terminal may alternatively be a tablet computer, a notebook computer, or another electronic device having a communication function. An example in which the Bluetooth headset 11 serving as a part of the terminal device 10 is used as the voice pickup device is provided. However, this application is not limited thereto. The terminal device 10 may alternatively include another wearable device that can pick up a voice, for example, a smartwatch or a smart band.

In the scenario shown in FIG. 2, for example, a controlled device is the vehicle 20. However, this application is not limited thereto. The controlled device may alternatively be another electronic device, for example, an electronic access control or another electronic device related to a control function. When the controlled device is implemented as a device other than the vehicle, the vehicle-mounted T-Box 21 and the vehicle ECU 22 correspond to communications apparatuses of the electronic device and execution apparatuses for performing corresponding actions.

In the scenario shown in FIG. 2, for example, an electronic device for remote communication is the cloud server 30. However, this application is not limited thereto. The device for remote communication may alternatively be another electronic device that has a remote communication capability and functions such as storage and computing.

To enable a person of ordinary skill in the art to better understand technical solutions in this application, the following describes the technical solutions in this application with reference to a vehicle control scenario. However, this application is not limited thereto. Implementations of this application may also be applied to a scenario other than the vehicle scenario.

FIG. 2 is a diagram of a scenario in which vehicle control is implemented. In this application scenario, the Bluetooth headset 11, the mobile phone 12, the vehicle 20, and the cloud server 30 form bodies for implementing vehicle control. The cloud server 30 is remotely communicatively connected to the mobile phone 12 and the vehicle 20. The Bluetooth headset 11 is configured to obtain voiceprint information and voice control information of the user. The mobile phone 12 is configured to forward the voiceprint information to the cloud server 30. The cloud server 30 performs user identity authentication on the voiceprint information obtained by the Bluetooth headset 11, and after the user identity authentication succeeds, implements control of the vehicle 20.

In other words, the cloud server 30 is used as an authentication center, and voiceprint information of a vehicle owner is pre-stored in the cloud server 30. When the vehicle 20 is used, the voiceprint information of the user is first uploaded to the cloud server 30, to perform user identity authentication. After the authentication succeeds, the user is authorized to perform vehicle control. Security authentication is implemented based on the voiceprint information of the user. The voiceprint information is similar to DNA, a fingerprint, and a palm print. Voiceprint information of each person is unique, and can improve vehicle control security compared with a physical vehicle key and a Bluetooth key.

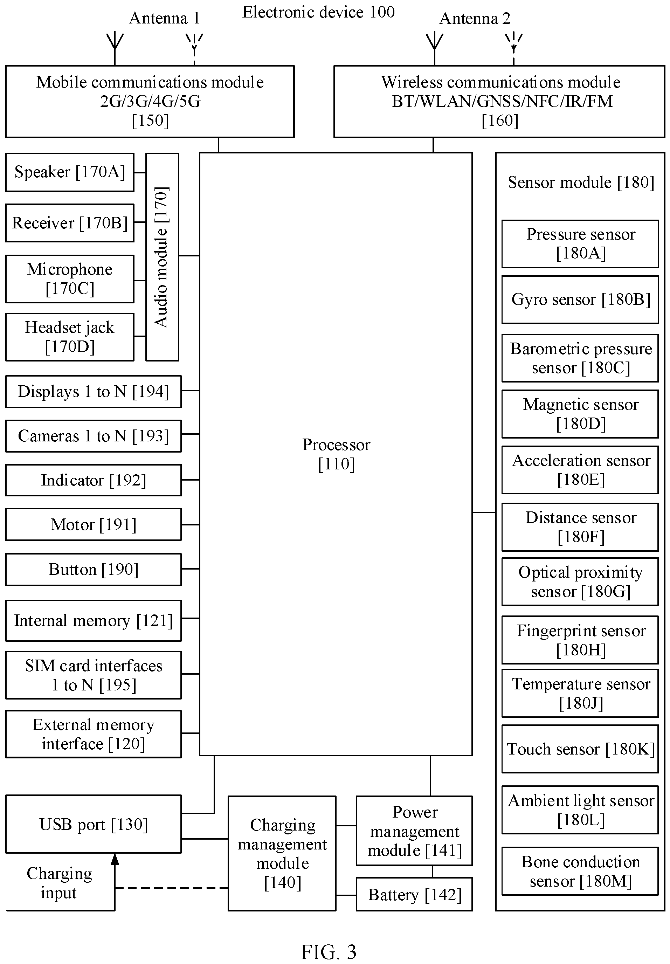

FIG. 3 is a schematic diagram of a structure of an electronic device 100 according to an embodiment of this application. A structure of the mobile phone 12 in the foregoing embodiment may be the same as that of the electronic device 100. Details are as follows:

The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The processor may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data that has been used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, or a subscriber identification module (subscriber identification module, SIM) interface.

A wireless communication function of the electronic device 100 may be implemented by using the antenna 1, the antenna 2, the mobile communications module 150, the wireless communications module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antennas may be used in combination with a tuning switch.

The mobile communications module 150 may provide a wireless communication solution that includes 2G/3G/4G/5G or the like and that is applied to the electronic device 100. The mobile communications module 150 may include at least one filter, a switch, a power amplifier, a low noise amplifier (low noise amplifier, LNA), and the like. The mobile communications module 150 may receive an electromagnetic wave by using the antenna 1, perform processing such as filtering or amplification on the received electromagnetic wave, and transmit the electromagnetic wave to the modem processor for demodulation. The mobile communications module 150 may further amplify a signal modulated by the modem processor, and convert the signal into an electromagnetic wave by using the antenna 1 for radiation. In some embodiments, at least some functional modules of the mobile communications module 150 may be disposed in the processor 110. In some embodiments, at least some functional modules of the mobile communications module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate the received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video by the display 194. In some embodiments, the modem processor may be an independent device. In some other embodiments, the modem processor may be independent of the processor 110, and is disposed in a same device with the mobile communications module 150 or another functional module.

The wireless communications module 160 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 100. The wireless communications module 160 may be one or more components integrating at least one communications processor module. The wireless communications module 160 receives an electromagnetic wave through the antenna 2, performs frequency modulation and filtering processing on an electromagnetic wave signal, and sends a processed signal to the processor 110. The wireless communications module 160 may further receive a to-be-sent signal from the processor 110, perform frequency modulation and amplification on the signal, and convert the signal into an electromagnetic wave by using the antenna 2 for radiation.

In some embodiments, in the electronic device 100, the antenna 1 and the mobile communications module 150 are coupled, and the antenna 2 and the wireless communications module 160 are coupled, so that the electronic device 100 can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The external memory interface 120 may be used to connect to an external storage card, for example, a Micro SD card, to extend a storage capability of the electronic device 100. The external storage card communicates with the processor 110 through the external memory interface 120, to implement a data storage function. For example, files such as music and a video are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a sound play function and an image play function), and the like. The data storage area may store data (for example, audio data and an address book) and the like created during use of the electronic device 100. In addition, the internal memory 121 may include a high-speed random access memory, and may further include a nonvolatile memory, for example, at least one magnetic disk storage device, a flash memory device, a universal flash storage (universal flash storage, UFS), and the like. The processor 110 runs the instructions stored in the internal memory 121, and/or the instructions stored in the memory disposed in the processor, to perform various function applications of the electronic device 100 and data processing. In this embodiment, the internal memory 121 stores instructions. When the instructions are executed by the processor 110, the electronic device 100 is enabled to perform the device control method provided in the implementations of this application.

The electronic device 100 may implement an audio function such as music playing or recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to: code and decode an audio signal. In some embodiments, the audio module 170 may be disposed in the processor 110, or some functional modules of the audio module 170 are disposed in the processor 110.

The speaker 170A, also referred to as a "horn", is configured to convert an audio electrical signal into a sound signal. The electronic device 100 may listen to music or answer a hands-free call by using the speaker 170A.

The receiver 170B, also referred to as an "earpiece", is configured to convert the audio electrical signal into the sound signal. When a call is answered or voice information is received by using the electronic device 100, the receiver 170B may be put close to a human ear to listen to a voice.

The microphone 170C, also referred to as a "mike" or a "mic", is configured to convert a sound signal into an electrical signal. When making a call or sending voice information, a user may make a sound near the microphone 170C through the mouth of the user, to input the sound signal to the microphone 170C. At least one microphone 170C may be disposed in the electronic device 100. In some other embodiments, two microphones 170C may be disposed in the electronic device 100, to collect a sound signal and further implement a noise reduction function. In some other embodiments, three, four, or more microphones 170C may alternatively be disposed in the electronic device 100, to collect a sound signal, reduce noise, further identify a sound source, implement a directional recording function, and the like.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in a headset, to form a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

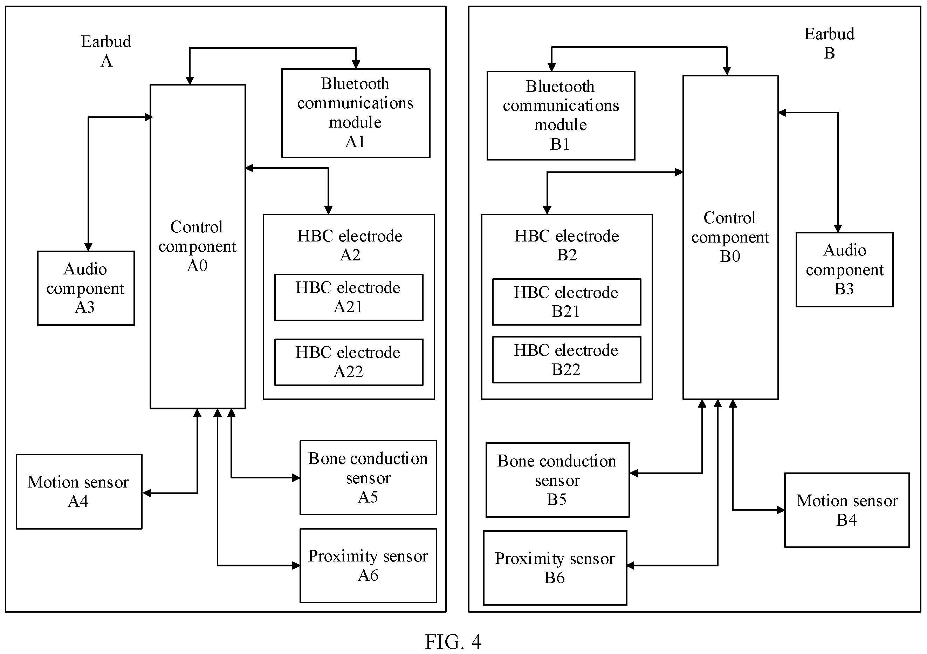

FIG. 4 is a schematic diagram of a structure of a headset device according to an embodiment of this application. In this embodiment, the headset device includes a left earbud A and a right earbud B. A structure of the Bluetooth headset 11 in the foregoing embodiment may be the same as that of the headset device. Details are provided below.

The left earbud A may include a control component A0, a Bluetooth communications module A1, an HBC (Human Body Communication, human body communication) electrode A2, an audio component A3, a storage component A4, a voice recognition component A5, an authentication component A6, a voiceprint collection component A7, a bone conduction sensor A8, a motion sensor A9, a proximity sensor A10, and the like.

The right earbud B may include a control component B0, a Bluetooth communications module B 1, an HBC (Human Body Communication, human body communication) electrode B2, an audio component B3, a storage component B4, a voice recognition component B5, an authentication component B6, a voiceprint collection component B7, a bone conduction sensor B8, a motion sensor B9, a proximity sensor B 10, and the like.

It may be understood that the structure of the headset device shown in this embodiment of this application does not constitute a specific limitation on the headset device. In some other embodiments of this application, the headset device may include more or fewer components than those shown in the figure, or combine some components, or split some components, or have different component arrangements. The components shown in the figure may be implemented by hardware, software, or a combination of software and hardware.

The control component A0 of the left earbud A and the control component B0 of the right earbud B may include one or more processing units. For example, the control components A0 and B0 may include an application processor (application processor, AP), a controller, a digital signal processor (digital signal processor, DSP), and/or a neural-network processing unit (neural-network processing unit, NPU). Different processing units may be independent components, or may be integrated into one or more processors.

The control component A0 of the left earbud A and the control component B0 of the right earbud B may generate an operation control signal based on an instruction operation code and a time sequence signal, to complete control of instruction fetching and instruction execution. A memory may be further disposed in the control components A0 and B0, and is configured to store instructions and data (for example, voiceprint information of a bone user). The control components A0 and B0 may perform the user identity authentication based on the stored voiceprint information of the user.

The Bluetooth communications module A1 of the left earbud A and the Bluetooth communications module B 1 of the right earbud B are configured to perform Bluetooth communication between the headset device and an external body, for example, implement Bluetooth communication between the headset device and the mobile phone 12.

The HBC electrode A2 of the left earbud A and the HBC electrode B2 of the right earbud B are configured to communicate with a device on a body of a user, and a BLE (Bluetooth Low Energy, Bluetooth low energy) antenna may be used to perform communication with a device that is not on the body (or cannot perform HB C communication). For example, the headset communicates with the mobile phone 12 by using BLE. In some embodiments, an apparatus may be configured to perform communication by using one of a human contact mode and a low energy mode based on one or more transmission criteria. In some embodiments, an apparatus may include a BLE module having an HBC transmission mode for performing communication via an HBC communications technology.

In this embodiment, the HBC electrode A2 of the left earbud A includes two HBC electrodes A21 and A22, where the HBC electrode A21 is a signal electrode, and the HBC electrode A22 is a ground electrode, and is configured to send and receive an HBC signal on an HBC channel. The HBC electrode B2 of the right earbud B includes two HBC electrodes B21 and B22, where the HBC electrode B21 is a signal electrode, and the HBC electrode B22 is a ground electrode, and is configured to send and receive an HBC signal on the HBC channel.

The audio component A3 of the left earbud A and the audio component B3 of the right earbud B may receive an audio signal, to implement a function of answering a call or playing music by using the Bluetooth headset. In some embodiments, the audio component A3 of the left earbud A and the audio component B3 of the right earbud B receive a voice of a user, obtain voiceprint information of the user, and obtain, from the voice of the user through parsing, control information included in the voice. The audio component A3 of the left earbud A and the audio component B3 of the right earbud B are further configured to convert digital audio information into an analog audio signal for output, and are also configured to convert an analog audio input into a digital audio signal. The audio component A3 of the left earbud A and the audio component B3 of the right earbud B may be further configured to: code and decode an audio signal.

The motion sensor A4 of the left earbud A and the motion sensor B4 of the right earbud B may detect accelerations in various directions (usually three axes), may detect magnitude and a direction of gravity when the headset is static, may be configured to identify a posture of the headset device (such as switching between a landscape mode and a portrait mode, a related game, and magnetometer posture calibration), a function related to vibration recognition (such as a pedometer and a knock), and the like, and can further detect a heart rate, blood pressure, and the like of a user.

The bone conduction sensor A5 of the left earbud A and the bone conduction sensor B5 of the right earbud B are configured to collect bone voiceprints. The headset device may implement device unlocking, device locking, and the like by using the collected bone voiceprint features.

The proximity sensor A6 of the left earbud A and the proximity sensor B6 of the right earbud B are sensors that can detect a nearby object without contact. The proximity sensor may be used to implement in-ear/out-ear detection of the headset device, to help prolong use time of a battery after a full charge. Alternatively, an optical slider may be used to perform volume adjustment, to implement basic touch-free gesture control.

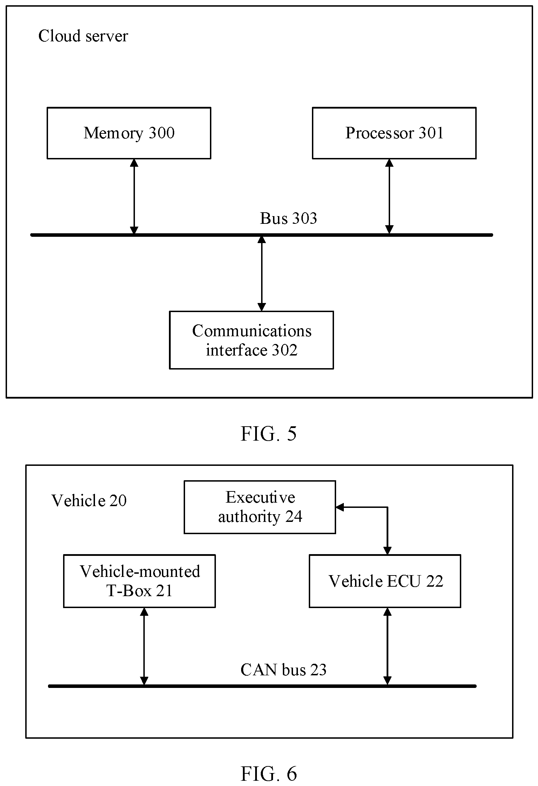

FIG. 5 is a schematic diagram of a structure of a server according to an embodiment of this application.

The cloud server includes a memory 300, a processor 301, a communications interface 302, and a bus 303. The memory 300, the processor 301, and the communications interface 302 implement mutual communication connections through the bus 303.

The memory 300 may include a high-speed random access memory, or may further include a nonvolatile memory, for example, one or more magnetic disk storage apparatuses, a flash memory, or another nonvolatile solid-state memory. In some examples, the memory 300 may further include memories that are remotely disposed relative to the processor 301, and these remote memories may be connected to the server over a network. Examples of the foregoing network include but are not limited to the Internet, an intranet, a local area network, a mobile communications network, and a combination thereof. The memory 300 may be a read-only memory (Read-Only Memory, ROM), a static storage device, a dynamic storage device, or a random access memory (Random Access Memory, RAM). The memory 300 may be configured to store a database, a queue, a software program and a module of an application, for example, program instructions/a module corresponding to the device control method in the implementations of this application. The processor 301 runs the software program and module stored in the memory 300, to perform various function applications and data processing, that is, to implement the foregoing device control method. When the program stored in the memory 300 is executed by the processor 301, the processor 301 and the communications interface 302 are configured to perform the method or steps performed by the cloud server in the device control method in this application.

FIG. 5 shows only one processor 301, but a quantity of processors 301 is not limited thereto. The cloud server may further include a plurality of processors 301. The processor 301 may include but is not limited to a processing apparatus such as a central processing unit CPU, a graphics processing unit GPU, a digital signal processor DSP, a microprocessor MCU, an application-specific integrated circuit (Application-Specific Integrated Circuit, ASIC), or a programmable logic device FPGA, and is configured to execute a related program, to implement the method or steps performed by the cloud server in the device control method in this application.

The processor 301 may be an integrated circuit chip, and has a signal processing capability. In an implementation process, the steps of the device control method in this application may be completed by using a hardware integrated logic circuit or an instruction in a form of software in the processor 301. The foregoing processor 301 may be a general purpose processor, a digital signal processor (Digital Signal Processor, DSP), an application-specific integrated circuit (ASIC), a field programmable gate array (Field Programmable Gate Array, FPGA) or another programmable logic device, a discrete gate or a transistor logic device, or a discrete hardware component. The processor may implement or perform the method, the steps, and logical block diagrams that are disclosed in embodiments of this application. The general purpose processor may be a microprocessor, or the processor may be any conventional processor or the like. The steps of the method disclosed with reference to embodiments of this application may be directly performed and completed by a hardware decoding processor, or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 300, and the processor 301 reads information in the memory 300 and performs, in combination with the hardware of the processor 301, the method or the steps performed by the cloud server in any embodiment of the method in this application.

The communications interface 302 uses a transceiver apparatus such as but not limited to a transceiver, to implement communication between the cloud server and another device or a communications network. For example, data from the mobile phone 12 or the vehicle 20 may be received by using the communications interface 302. The network may include various connection types, such as wired, wireless communication links, a cloud, or a fiber-optic cable.

The bus 303 may include a path for transmitting information between the components (for example, the memory 300, the processor 301, and the communications interface 302) in the server.

It should be noted that although only the memory 300, the processor 301, and the communications interface 302 are shown in the cloud server shown in FIG. 5, in a specific implementation process, a person skilled in the art should understand that the cloud server further includes another component required for implementing normal running. In addition, based on a specific requirement, a person skilled in the art should understand that the cloud server may further include hardware components for implementing other additional functions. In addition, a person skilled in the art should understand that the cloud server may alternatively include only components required for implementing embodiments of this application, but not necessarily include all the components shown in FIG. 5.

FIG. 6 is a schematic diagram of a structure of a vehicle according to an embodiment of this application. The structure of the vehicle 20 in the foregoing embodiment may be the same as that of the vehicle. Specifically, the vehicle 20 includes the vehicle-mounted T-Box 21 and the vehicle ECU 22. The vehicle-mounted T-Box 21 is communicatively connected to the vehicle ECU 22 through a CAN (Controller Area Network, controller area network). The vehicle-mounted T-Box 21 is used as a communications unit of the vehicle 20, and the vehicle ECU 22 is used as a control unit of the vehicle 20. After receiving a signal and instructions transmitted from the outside, the vehicle-mounted T-Box 21 sends the signal and the instructions to the vehicle ECU 22, and then the vehicle ECU 22 controls a related executive authority 24 to execute various control functions. A specific type of the executive authority 24 is related to a control function that needs to be implemented by the executive authority 24. For example, in a scenario in which vehicle unlocking/locking is implemented, the executive authority 24 is an executor such as a motor or an electromagnetic coil, and the executive authority such as the motor or the electromagnetic coil performs the vehicle unlocking/locking action.

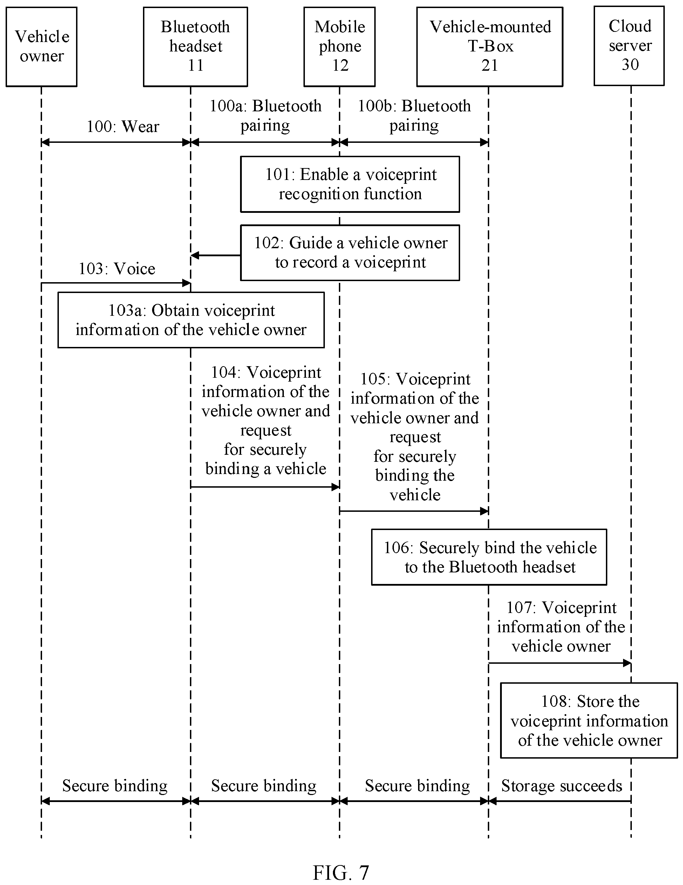

Refer to FIG. 7. A process of recording and registering the voiceprint by the vehicle owner is first described. When the vehicle 20 needs to update an unlock password again, for example, when the vehicle owner purchases a new vehicle or a second-hand vehicle, or when a family member needs to be added as a user, the voiceprint information (including but not limited to bone voiceprint information) of the vehicle owner needs to be first recorded, and is used for the user identity authentication during daily use. FIG. 7 shows a specific process of recording voiceprint information of a vehicle owner according to some embodiments. A specific implementation procedure includes the following steps.

100: The vehicle owner wears a Bluetooth headset 11, and both the left ear and the right ear of the vehicle owner wear the Bluetooth headset 11.

100a: The Bluetooth headset 11 completes Bluetooth pairing with a mobile phone 12.

The Bluetooth headset 11 and the mobile phone 12 are communicatively connected through Bluetooth. Correspondingly, a type of data transmitted between the Bluetooth headset 11 and the mobile phone 12 is a data packet that conforms to the Bluetooth protocol.

100b: The mobile phone 12 completes Bluetooth pairing with a vehicle-mounted T-Box 21.

The mobile phone and the vehicle-mounted T-Box 21 are communicatively connected through Bluetooth. Correspondingly, a type of data transmitted between the mobile phone 12 and the vehicle-mounted T-Box 21 is a data packet that conforms to the Bluetooth protocol. The vehicle-mounted T-Box 21 includes a Bluetooth vehicle key module. The Bluetooth vehicle key module may implement a near-field connection between the mobile phone 12 and the vehicle-mounted T-Box 21 and data transmission between the vehicle-mounted T-Box 21 and the mobile phone 12.

101: After the Bluetooth headset 11, the mobile phone 12, and the vehicle-mounted T-Box 21 complete Bluetooth pairing, the Bluetooth headset 11, the mobile phone 12, and the vehicle-mounted T-Box 21 have established a communication connection, and can transmit information between each other. The user needs to start binding between the mobile phone 12 and the vehicle 20 on a mobile app of the mobile phone, and authentication is required as a prerequisite for the binding action. In this way, the mobile app first enables a voiceprint recognition function, to guide the user to complete voiceprint recording.

102: The mobile phone APP provides guidance for the vehicle owner to record the voiceprint information. In this case, the vehicle owner hears a recorded prompt in the Bluetooth headset 11. For example, the Bluetooth headset 11 plays the prompt "Please say something freely".

103: After hearing "Please say something freely" played by the Bluetooth headset 11, the vehicle owner speaks. For example, the vehicle owner says "Hello Xiaoyi".

103a: The Bluetooth headset 11 obtains the voiceprint information of the vehicle owner when receiving the voice of the vehicle owner.

There are mainly two forms of methods for obtaining the voiceprint information of the user by the Bluetooth headset 11. One form is that the Bluetooth headset 11 obtains the voiceprint information from the voice of the user through parsing. That is, when the user says "Hello Xiaoyi", the Bluetooth headset 11 obtains the voiceprint information of the user from the voice through parsing.

In addition, the Bluetooth headset 11 may further obtain a bone voiceprint of the user. Specifically, the bone conduction sensor (as shown in FIG. 4) is disposed in the Bluetooth headset 11, and the bone conduction sensor includes a sensor, a signal amplifier, a digital-to-analog conversion unit, a signal processing unit, and the like. After the user wears the Bluetooth headset 11, the Bluetooth headset 11 on one side plays audio of a specific band. The audio of the band cannot be perceived by a human ear, and playing time is too short to be harmful to a person. Then, the Bluetooth headset 11 on the other side temporarily serves as a sound wave receiving device, collects, by using the bone conduction sensor, a bone sensing sound wave that is transmitted by a bone and that is of the audio in the specific band, and processes the collected sound wave, to obtain final bone voiceprint information.

104: After obtaining the voiceprint information of the vehicle owner, the Bluetooth headset 11 sends, to the mobile phone 12, a request for secure binding between the mobile phone 12 and the vehicle 20, and sends the voiceprint information of the vehicle owner, where the request and the voiceprint information of the vehicle owner are sent to the mobile phone 12 through Bluetooth communication.

105: Generate, in an interface of the mobile app, and send, to the vehicle-mounted T-Box 21, a request for secure binding between the mobile phone and the vehicle 20, where the request and the voiceprint information of the vehicle owner are sent to the vehicle-mounted T-Box 21 through Bluetooth communication.

106: After receiving the vehicle binding request, the vehicle-mounted T-Box 21 securely binds the Bluetooth headset 11 to the vehicle-mounted T-Box 21, to implement secure binding between the Bluetooth headset 11 and the vehicle 20. A used security solution is a key authentication solution, for example, AKA (Authentication and Key Agreement, authentication and key agreement) authentication.

107: After the Bluetooth headset 11 is securely bound to the vehicle 20, the vehicle-mounted T-Box 21 uploads the voiceprint information of the vehicle owner to the cloud server 30.

108: The cloud server 30 correspondingly stores the voiceprint information of the vehicle owner and ID of the vehicle owner, to facilitate future invoking by the vehicle owner. In addition, the cloud server 30 feeds back a storage success result to the vehicle-mounted T-Box 21. After receiving the result that the voiceprint information of the vehicle owner is successfully stored that is fed back by the cloud server 30, the vehicle-mounted T-Box 21 feeds back a result of secure binding between the Bluetooth headset 11 and the vehicle 20 to the mobile phone 12. In this case, after receiving the feedback result, the mobile phone 12 may notify the vehicle owner through voice broadcast by using the Bluetooth headset 11. The vehicle owner hears "The secure binding between the Bluetooth headset and the vehicle succeeds" played by the Bluetooth headset 11.

According to this embodiment of this application, the Bluetooth headset 11 communicates with the mobile phone 12 through BLE (Bluetooth Low Energy, Bluetooth low energy), and the mobile phone 12 communicates with the vehicle-mounted T-Box 21 through BLE (Bluetooth Low Energy, Bluetooth low energy). A person skilled in the art may understand that a communication manner between the Bluetooth headset 11 and the mobile phone 12 and a communication manner of the mobile phone 12 may not be limited to BLE mentioned in the foregoing embodiment, and may also be another short-range wireless communications technology, for example, including but not limited to BT (Bluetooth, Bluetooth), NFC (Near Field Communication, near field communication), FM (Frequency Modulation, frequency modulation), ZigBee, wireless broadband (Wi-Fi), ultra-wideband (UWB), IR (Infrared, infrared) communication, and the like.

A manner of communication between the mobile phone 12 and the vehicle-mounted T-Box 21 may not be limited to BLE mentioned in the foregoing embodiment, may also be another short-range wireless communications technology, for example, including but not limited to BT (Bluetooth, Bluetooth), NFC (Near Field Communication, near field communication), FM (Frequency Modulation, frequency modulation), and IR (Infrared, infrared) communication, and may also be another long-range wireless communications technology, for example, including but not limited to GPRS/CDMA, 5G, LTE/LTE-Advanced/LTE-Advanced Pro (4G), satellite communication, and a shortwave communications technology.

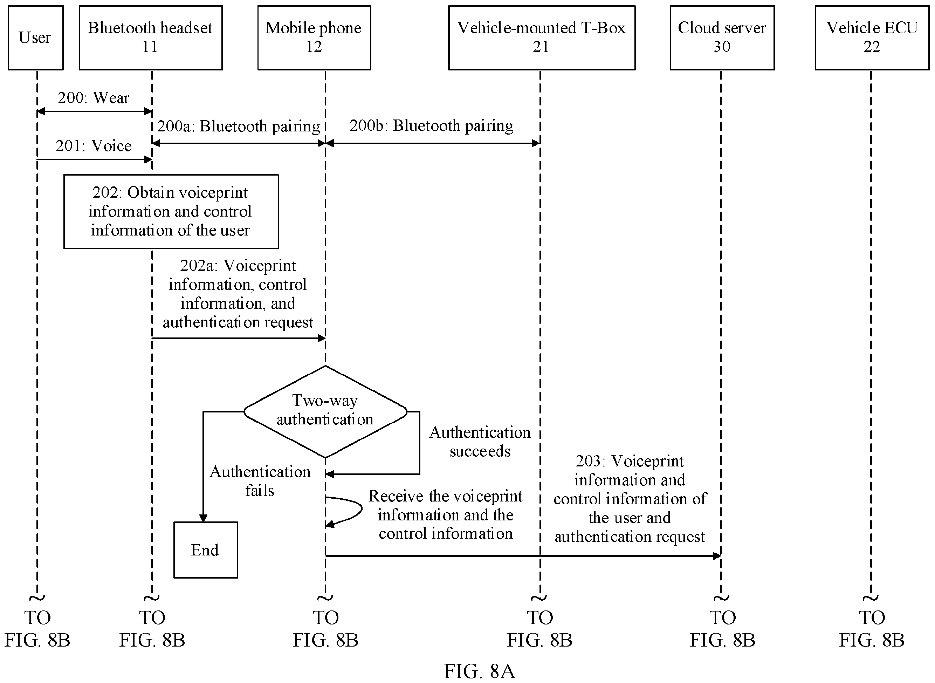

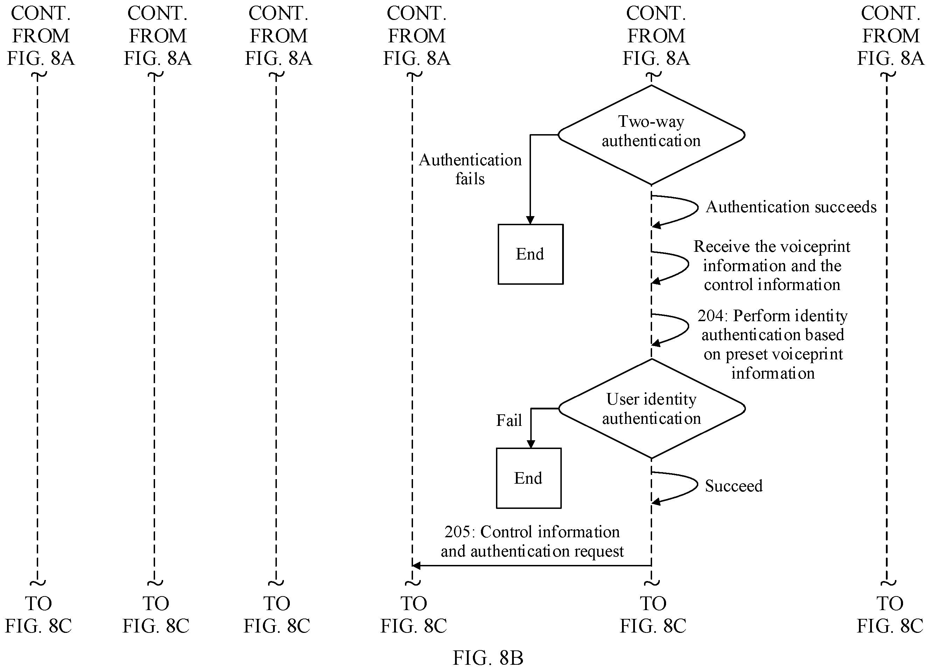

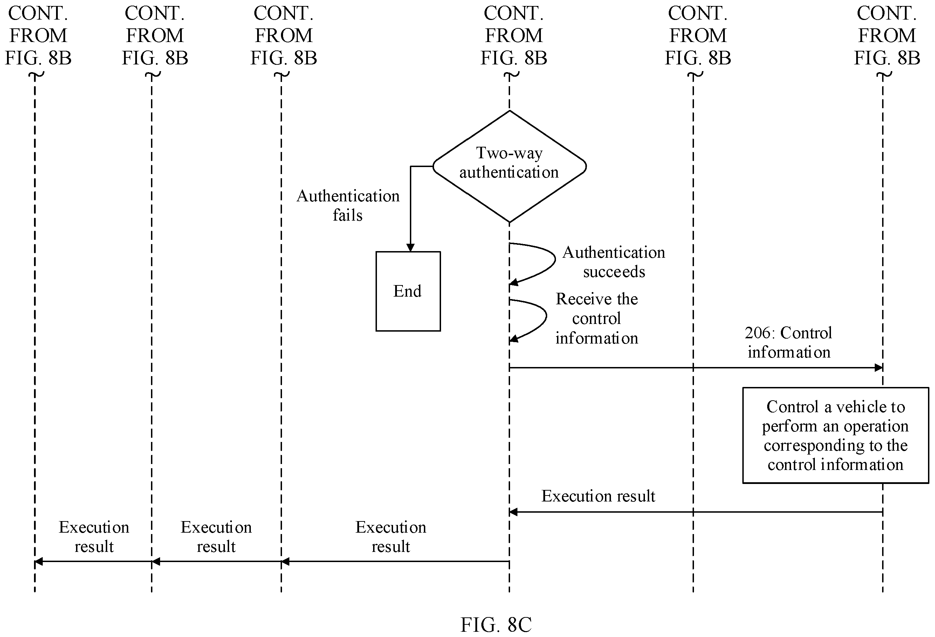

After the Bluetooth headset 11 is securely bound to the vehicle-mounted T-Box 21, in a daily process of using the vehicle 20, the user may control the vehicle 20 by using the headset. FIG. 8A to FIG. 8C are a flowchart of a vehicle control method according to an embodiment of this application. Based on the flowchart shown in FIG. 8A to FIG. 8C, the following describes in detail a control process of the vehicle 20.

Specifically, as shown in FIG. 8A to FIG. 8C, the method provided in this embodiment includes the following steps.

200: A user of the vehicle 20 wears a Bluetooth headset 11, and both the left ear and the right ear of the vehicle owner wear the Bluetooth headset 11.

200a: The Bluetooth headset 11 completes Bluetooth pairing with the mobile phone 12.

The Bluetooth headset 11 and the mobile phone 12 are communicatively connected through Bluetooth. Correspondingly, a type of data transmitted between the Bluetooth headset 11 and the mobile phone 12 is a data packet that conforms to the Bluetooth protocol.

200b: The mobile phone 12 completes Bluetooth pairing with the vehicle-mounted T-Box 21.

The mobile phone 12 and the vehicle-mounted T-Box 21 are communicatively connected through Bluetooth. Correspondingly, a type of data transmitted between the mobile phone 12 and the vehicle-mounted T-Box 21 is a data packet that conforms to the Bluetooth protocol. The vehicle-mounted T-Box 21 includes a Bluetooth vehicle key module. The Bluetooth vehicle key module may implement a near-field connection between the mobile phone 12 and the vehicle-mounted T-Box 21 and data transmission between the vehicle-mounted T-Box 21 and the mobile phone 12. 201: The user sends a control instruction through voice. For example, if the user expects to control the vehicle 20 to be unlocked, the user says "Please unlock the vehicle" to the Bluetooth headset 11, to express a control requirement of the user for the vehicle 20.

The control instruction sent by the user through voice is not limited to vehicle unlocking, and the control instruction may further include but is not limited to vehicle control instructions such as vehicle locking, vehicle startup, vehicle window opening, vehicle window closing, air conditioner on, air conditioner off, seat height raising, seat height descending, trunk opening, and trunk closing.

202: The Bluetooth headset 11 receives the voice of the user, obtains the voiceprint information of the user, and obtains, from the voice of the user through parsing, the control information (vehicle control information such as vehicle unlocking, vehicle locking, vehicle startup, vehicle window opening, vehicle window closing, air conditioner on, air conditioner off, seat height raising, seat height descending, trunk opening, and trunk closing) included in the voice.

An example in which the user says "please unlock the vehicle" is used. After the user says "Please unlock the vehicle" to the Bluetooth headset 11, the Bluetooth headset 11 may obtain the voiceprint information of the user.

There are mainly two forms of methods for obtaining the voiceprint information of the user by the Bluetooth headset 11. One form is that the Bluetooth headset 11 obtains the voiceprint information from the voice of the user through parsing. That is, when the user says "Please unlock the vehicle", the Bluetooth headset 11 obtains the voiceprint information of the user from the voice through parsing.

In addition, the Bluetooth headset 11 may further obtain the bone voiceprint of the user. Specifically, the bone conduction sensor (as shown in FIG. 4) is disposed in the Bluetooth headset 11, and the bone conduction sensor includes the sensor, the signal amplifier, the digital-to-analog conversion unit, the signal processing unit, and the like. After the user wears the Bluetooth headset 11, the Bluetooth headset 11 on one side plays the audio of the specific band. The audio of the band cannot be perceived by the human ear, and the playing time is too short to be harmful to the person. Then, the Bluetooth headset 11 on the other side temporarily serves as the sound wave receiving device, collects, by using the bone conduction sensor, the bone sensing sound wave that is transmitted by the bone and that is of the audio in the specific band, and processes the collected sound wave, to obtain the final bone voiceprint information. Because a skull structure of each person is unique, the collected bone voiceprint information is unique. The user identity authentication is performed by using the bone voiceprint information. This further improves the vehicle control security, and there is no need to worry about vehicle theft caused by a headset loss.

In addition to obtaining the voiceprint information of the user, the Bluetooth headset 11 obtains, from the voice of the user through parsing, a keyword included in the obtained voice, and determines corresponding control information based on the keyword. For example, if a keyword included in the voice "Please unlock the vehicle" that is said by the user and that is obtained by the Bluetooth headset 11 is "Unlock the vehicle", it is determined, based on "Unlock the vehicle", that the user expects to unlock the vehicle 20. In this process, an existing voice recognition solution in which semantic recognition is performed from the voice may be used. For example, a voice recognition server (for example, HUAWEI Cloud EI voice recognition server) is used. After receiving the voice of the user, the Bluetooth headset sends the voice of the user to the voice recognition server for voice recognition, converts the user statement into text, and sends the text to a human-machine interaction server for semantic parsing.

202a: The Bluetooth headset 11 transmits the voiceprint information and the control information to the mobile phone 12.

The Bluetooth headset 11 transmits the voiceprint information and the control information to the mobile phone 12, that is, data transmission is performed between the Bluetooth headset 11 and the mobile phone 12. For data transmission security, before the mobile phone 12 receives the voiceprint information and the control information that are transmitted by the Bluetooth headset 11, the Bluetooth headset 11 sends an authentication request to the mobile phone 12. In this embodiment, two-way authentication between the Bluetooth headset 11 and the mobile phone 12 is completed on the side of the mobile phone 12. If the two-way authentication fails, the data transmission between the Bluetooth headset 11 and the mobile phone 12 ends. If the two-way authentication succeeds, the Bluetooth headset 11 transmits both the voiceprint information and the control information of the user to the mobile phone 12 according to the Bluetooth protocol, and the mobile phone 12 receives the voiceprint information and the control information that are sent by the Bluetooth headset 11. The two-way authentication solution is not limited, for example, AKA (Authentication and Key Agreement, authentication and key agreement) authentication.

It is simple to control an operation such as unlocking/locking of the vehicle 20 by using a voice method, which greatly improves user experience of vehicle control and improves user satisfaction.

203: The mobile phone 12 transmits both the voiceprint information and the control information of the user to the cloud server 30.

As a data forwarding unit between the Bluetooth headset 11 and the cloud server 30, the mobile phone 12 forwards, to the cloud server 30, the voiceprint information and the control information of the user that are sent by the Bluetooth headset 11. Similarly, data transmission is performed between the mobile phone 12 and the cloud server 30. For data transmission security, before the cloud server 30 receives the voiceprint information and the control information of the user that are forwarded by the mobile phone 12, the mobile phone 12 sends an authentication request to the cloud server 30. In this embodiment, two-way authentication between the mobile phone 12 and the cloud server 30 is completed on the side of the cloud server 30. If the two-way authentication fails, the data transmission between the mobile phone 12 and the cloud server 30 ends. If the two-way authentication succeeds, the mobile phone 12 transmits both the voiceprint information and the control information of the user to the cloud server 30 according to the Bluetooth protocol, and the cloud server 30 receives the voiceprint information and the control information that are forwarded by the mobile phone 12. The two-way authentication solution is not limited, for example, AKA (Authentication and Key Agreement, authentication and key agreement) authentication.

204: The cloud server 30 matches the voiceprint information with voiceprint information preset in the cloud server 30, to perform the user identity authentication.

If the voiceprint information that is forwarded by the mobile phone 12 and that is received by the cloud server does not match the voiceprint information preset in the cloud server 30, the cloud server 30 determines that the user identity authentication fails, and a vehicle control request ends. If the voiceprint information that is forwarded by the mobile phone 12 and that is received by the cloud server matches the voiceprint information preset in the cloud server 30, the cloud server 30 determines that the user identity authentication succeeds, and the matching means that a similarity between the voiceprint information that is forwarded by the mobile phone 12 and that is received by the cloud server 30 and the voiceprint information preset in the cloud server 30 is greater than a specified threshold. A specific value of the specified threshold may be set when factory settings are performed on the device based on a requirement, or may be adjusted by the user based on a requirement during use. For example, for ease of use, the threshold may be set to 95%. If special consideration is given to security, the threshold may be set to a higher value, for example, 97% and 99%.

In some possible implementations, before the voiceprint information matching is performed, feature extraction needs to be performed on the voiceprint information, for example, extraction of a spectral feature, a prosodic feature, or the like of sound making is performed on the voiceprint information. The received voiceprint information is matched with the pre-stored voiceprint information, to determine whether the spectral feature, the prosodic feature, or the like reaches a specified threshold. A fixed phrase may be matched by using a template matching method. Alternatively, the matching may be performed based on a feature vector nearest to a pre-stored voiceprint information model by using a nearest neighbor method.

205: The cloud server 30 sends the control information to the vehicle 20.

The cloud server 30 determines that the user identity authentication succeeds and sends the vehicle control information to the vehicle 20. The vehicle 20 receives the control information by using the vehicle-mounted T-Box 21. The vehicle-mounted T-Box 21 of the vehicle 20 is connected to and communicates with the cloud server 30 by using an in-vehicle WAN (Wide Area Network, wide area network) device. The cloud server 30 transmits the control information to the vehicle-mounted T-Box 21, that is, data transmission is performed between the cloud server 30 and the vehicle-mounted T-Box 21.

For data transmission security, before the vehicle-mounted T-Box 21 receives the control information transmitted by the cloud server 30, the cloud server 30 sends an authentication request to the vehicle-mounted T-Box 21. In this embodiment, two-way authentication between the cloud server 30 and the vehicle-mounted T-Box 21 is completed on the side of the vehicle-mounted T-Box 21. If the two-way authentication fails, data transmission between the cloud server 30 and the vehicle-mounted T-Box 21 ends. If the two-way authentication succeeds, the cloud server 30 transmits the control information of the user to the vehicle-mounted T-Box 21, and the vehicle-mounted T-Box 21 receives the voiceprint information and the control information that are sent by the cloud server 30. The two-way authentication solution is not limited, for example, AKA (Authentication and Key Agreement, authentication and key agreement) authentication.

206: The vehicle-mounted T-Box 21 forwards the control information to the vehicle ECU 22.

When sending the control information to the vehicle ECU 22, the vehicle-mounted T-Box 21 specifically forwards a CAN packet for vehicle control to the vehicle ECU 22 through a CAN (Controller Area Network, controller area network). After receiving the packet, the vehicle ECU 22 controls the vehicle 20 to perform an operation corresponding to the control information, for example, vehicle control operations such as vehicle unlocking, vehicle locking, vehicle startup, vehicle window opening, vehicle window closing, air conditioner on, air conditioner off, seat height raising, seat height descending, trunk opening, and trunk closing.

After controlling the vehicle 20 to complete the corresponding operation, the vehicle ECU 22 sequentially reports execution results to the vehicle-mounted T-Box 21, the mobile phone 12, and the Bluetooth headset 11. The user may obtain the vehicle control execution results by using the Bluetooth headset 11. For example, the user may hear, by using the Bluetooth headset 11, the execution results broadcast through voice, such as "The vehicle is unlocked successfully", "The vehicle is locked successfully", "The vehicle starts successfully", "The vehicle window is opened successfully", "The vehicle window is closed successfully", "The air conditioner is turned on successfully", "The air conditioner is turned off successfully", "The seat height is raised successfully", "The seat height is descended successfully", "The trunk is opened successfully", and "The trunk is closed successfully".

In addition, in this embodiment, the voiceprint information of the vehicle owner is stored in the cloud. In this case, even if the vehicle owner does not bring a headset, the vehicle owner can use a headset of another person that can collect a voiceprint to unlock the vehicle 20 of the vehicle owner. In addition, the voiceprint information of the vehicle owner or voiceprint information a friend of the vehicle owner may be further stored in the cloud, to implement sharing of the vehicle 20. In addition, based on strong computing power of the cloud server 30, accuracy of voice recognition for the user is ensured, and user experience of controlling the vehicle 20 through voice is improved.

### Embodiment 2

This embodiment provides another vehicle control method. A difference between steps of the vehicle control method in this embodiment and those in Embodiment 1 lies in that the mobile phone 12 does not transmit both the voiceprint information and the control information of the user to the cloud server 30, but first transmits both the voiceprint information and the control information of the user to the vehicle, and then the vehicle forwards the voiceprint information and the control information to the cloud server. Specifically, in the vehicle control method in this embodiment, some implementation processes corresponding to step 203 are different, and other steps are the same. Only steps different from those in Embodiment 1 in this embodiment are described in detail below. For other same steps, refer to related step descriptions in Embodiment 1. Details are not described herein again.

In step 203 in Embodiment 1: The mobile phone 12 transmits both the voiceprint information and the control information of the user to the cloud server 30.

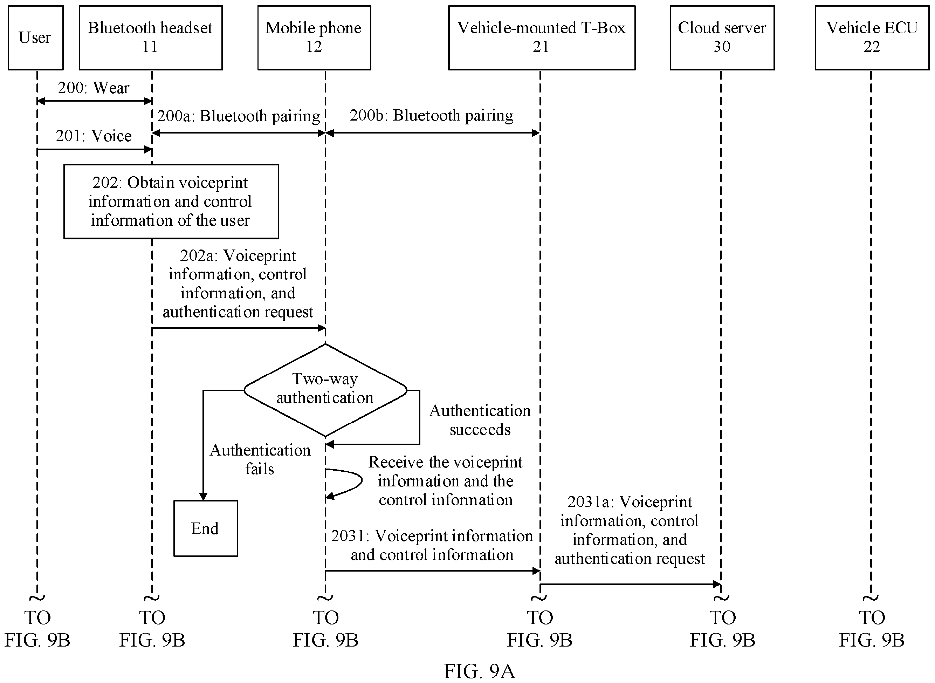

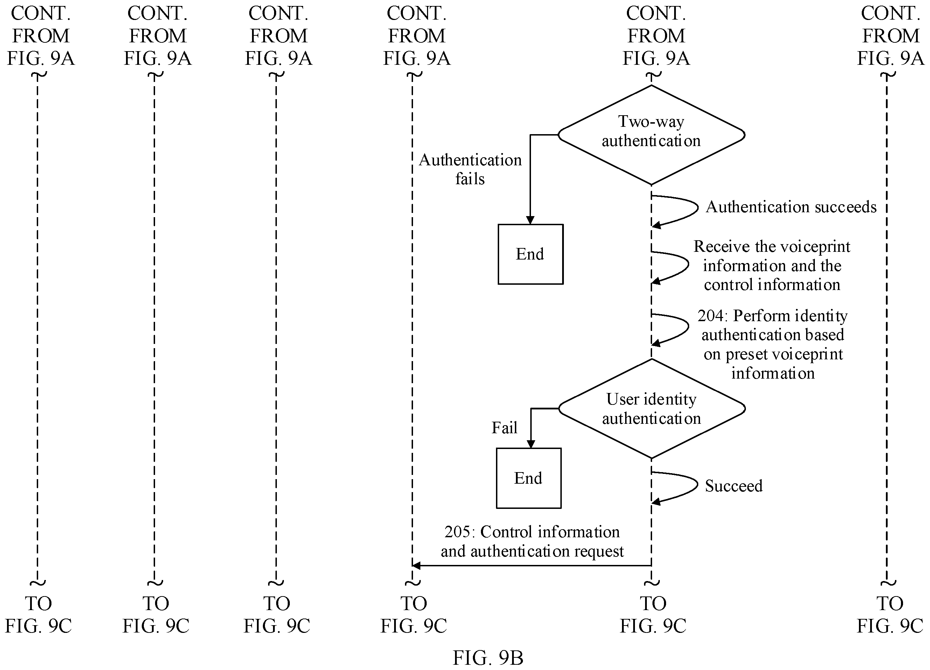

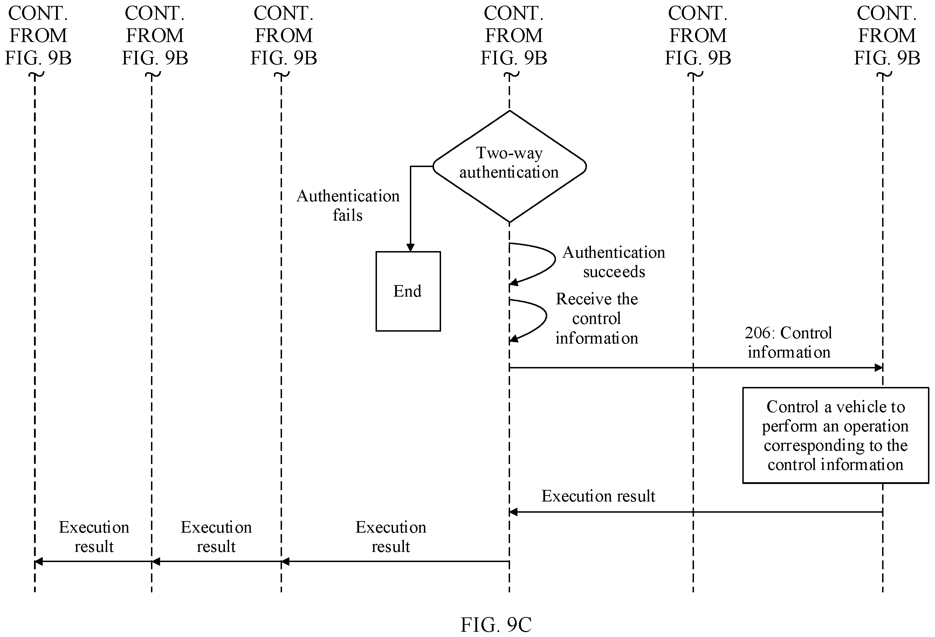

Refer to FIG. 9A to FIG. 9C. In this embodiment, step 203 in Embodiment 1 is replaced with the following steps.

Step 2031: The mobile phone 12 forwards, to the vehicle 20, the voiceprint information and the control information that are sent by the Bluetooth headset 11, and the vehicle 20 receives, by using the vehicle-mounted T-Box 21, the voiceprint information and the control information that are sent by the Bluetooth headset 11. In some possible implementations, after two-way authentication between the mobile phone 12 and the vehicle 20 succeeds, the vehicle 20 receives, by using the vehicle-mounted T-Box 21, the voiceprint information and the control information that are sent by the Bluetooth headset 11. The two-way authentication solution is not limited, for example, AKA (Authentication and Key Agreement, authentication and key agreement) authentication.

Step 2031a: The vehicle-mounted T-Box 21 forwards, to the cloud server 30, the voiceprint information and the control information that are sent by the Bluetooth headset 11.

That is, in this embodiment, the vehicle-mounted T-Box 21 is used as a data forwarding unit between the mobile phone 12 and the cloud server 30. The mobile phone 12 first sends the voiceprint information and the control information to the vehicle-mounted T-Box 21, and then the vehicle-mounted T-Box 21 forwards the voiceprint information and the control information to the cloud server 30. Because the voiceprint information and the control information are forwarded to the cloud server 30 by using the vehicle-mounted T-Box 21, data transmission security can be improved. After two-way authentication between the vehicle-mounted T-Box 21 and the cloud server 30 succeeds, the cloud server 30 receives the voiceprint information and the control information that are sent by the vehicle-mounted T-Box 21. The two-way authentication solution is not limited, for example, AKA (Authentication and Key Agreement, authentication and key agreement) authentication.

### Embodiment 3

This embodiment provides another vehicle control method. A difference between steps of the vehicle control method in this embodiment and those in Embodiment 1 lies in that the mobile phone 12 does not directly transmit both the voiceprint information and the control information of the user to the cloud server 30, but first directly transmits the voiceprint information of the user to the cloud server 30, and first transmits the control information to the vehicle, and then the vehicle forwards the control information to the cloud server. Specifically, in the vehicle control method in this embodiment, some implementation processes corresponding to step 203 are different, and other steps are the same. Only steps different from those in Embodiment 1 in this embodiment are described in detail below. For other same steps, refer to related step descriptions in Embodiment 1. Details are not described herein again.

In step 203 in Embodiment 1: The mobile phone 12 transmits both the voiceprint information and the control information of the user to the cloud server 30.

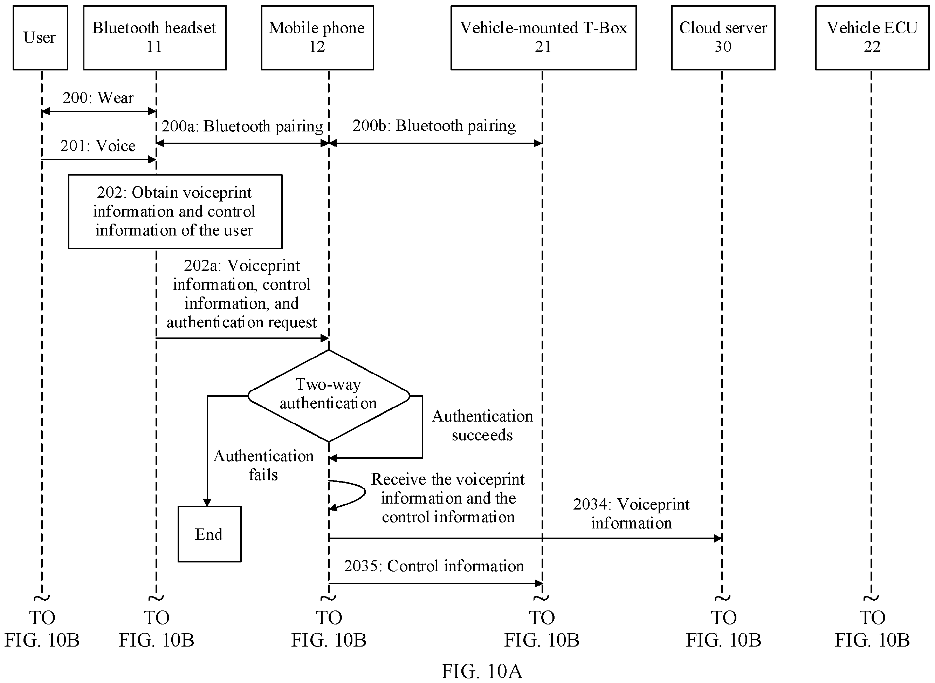

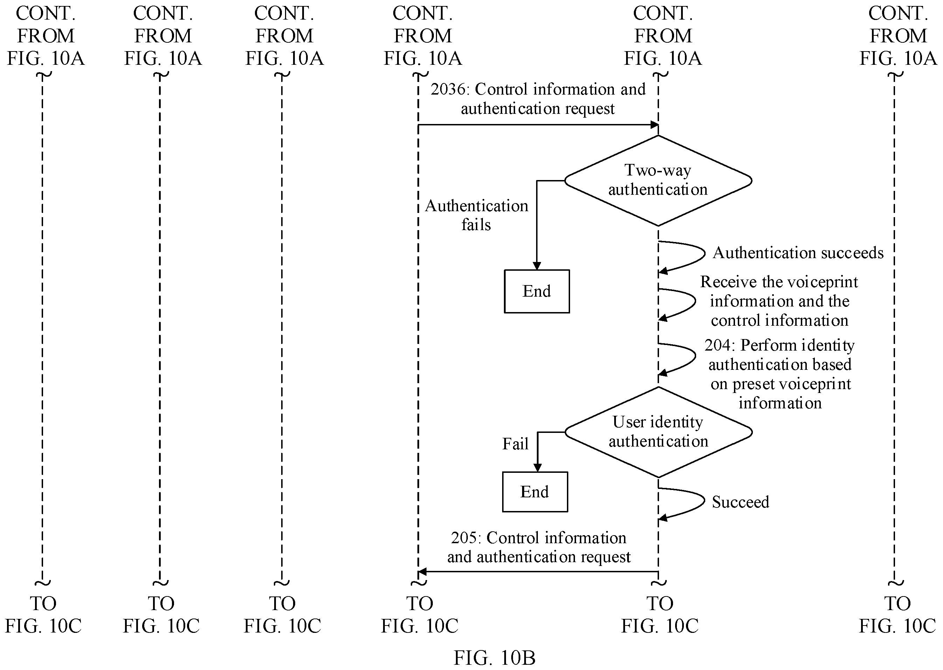

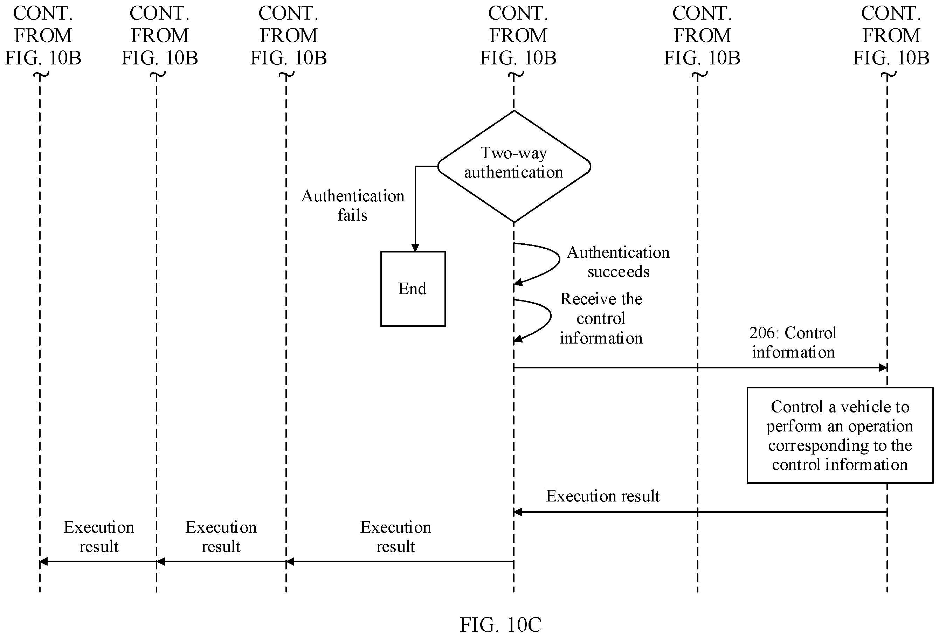

Refer to FIG. 10A to FIG. 10C. In this embodiment, step 203 in Embodiment 1 is replaced with the following steps.

Step 2034: the mobile phone 12 forwards, to the cloud server 30, the voiceprint information sent by the Bluetooth headset 11. In some possible implementations, after two-way authentication between the mobile phone 12 and the cloud server 30 succeeds, the cloud server 30 receives the voiceprint information sent by the mobile phone 12. The two-way authentication solution is not limited, for example, AKA (Authentication and Key Agreement, authentication and key agreement) authentication.

Step 2035: The mobile phone 12 forwards, to the vehicle 20, the control information sent by the Bluetooth headset 11, and the vehicle 20 receives the control information by using the vehicle-mounted T-Box 21. In some possible implementations, after two-way authentication between the mobile phone 12 and the vehicle 20 succeeds, the vehicle 20 receives, by using the vehicle-mounted T-Box 21, the control information sent by the Bluetooth headset 11. The two-way authentication solution is not limited, for example, AKA (Authentication and Key Agreement, authentication and key agreement) authentication.

Step 2036: The vehicle-mounted T-Box 21 forwards the control information to the cloud server 30. After two-way authentication between the vehicle-mounted T-Box 21 and the cloud server 30 succeeds, the cloud server 30 receives the voiceprint information and the control information that are sent by the vehicle-mounted T-Box 21. The two-way authentication solution is not limited, for example, AKA (Authentication and Key Agreement, authentication and key agreement) authentication.

That is, in this embodiment, the mobile phone 12 is used as a data forwarding unit of the voiceprint information between the Bluetooth headset 11 and the cloud server 30, and the vehicle-mounted T-Box 21 is used as a data forwarding unit of the control information between the mobile phone 12 and the cloud server 30. The mobile phone 12 forwards the voiceprint information to the cloud server 30, and forwards the control information to the vehicle-mounted T-Box 21. Then, the vehicle-mounted T-Box 21 forwards the control information to the cloud server 30. A plurality of bodies participate in data transmission of the voiceprint information and the control information, so that data transmission security can be improved.

### Embodiment 4

This embodiment provides another vehicle control method. A difference between steps of the vehicle control method in this embodiment and those in Embodiment 1 lies in that the mobile phone 12 does not directly transmit both the voiceprint information and the control information of the user to the cloud server 30, but first directly transmits the voiceprint information of the user to the cloud server 30, and after the cloud server 30 determines that user identity authentication succeeds, the mobile phone 12 directly transmits the control information to the vehicle. Specifically, in the vehicle control method in this embodiment, some implementation processes corresponding to step 203 and step 205 are different, and other steps are the same. Only steps different from those in Embodiment 1 in this embodiment are described in detail below. For other same steps, refer to related step descriptions in Embodiment 1. Details are not described herein again.

In step 203 in Embodiment 1, the mobile phone 12 transmits both the voiceprint information and the control information of the user to the cloud server 30, and in step 205, the cloud server 30 sends the control information to the vehicle 20.

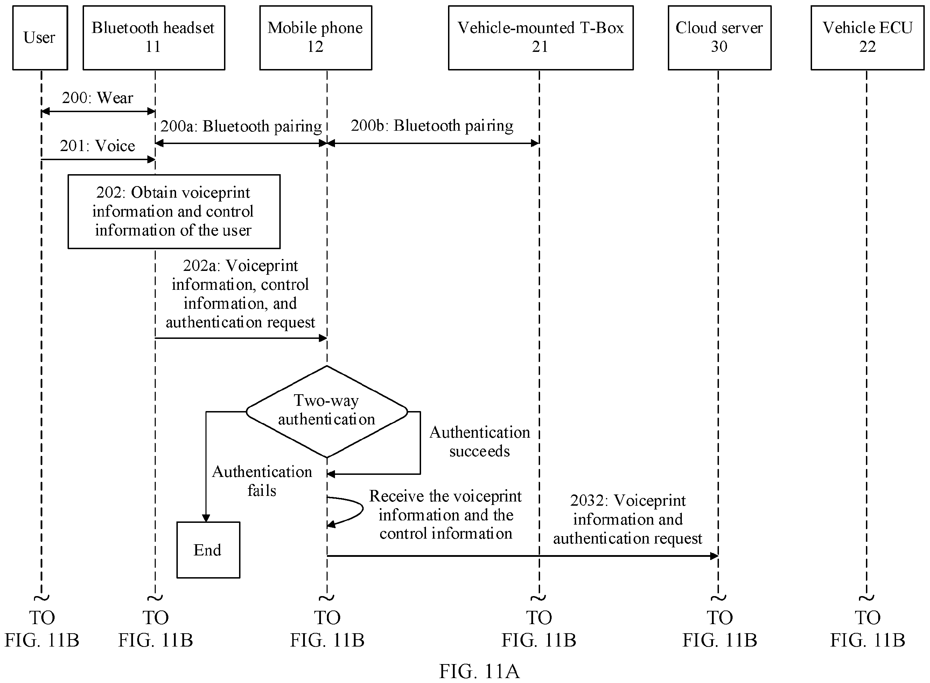

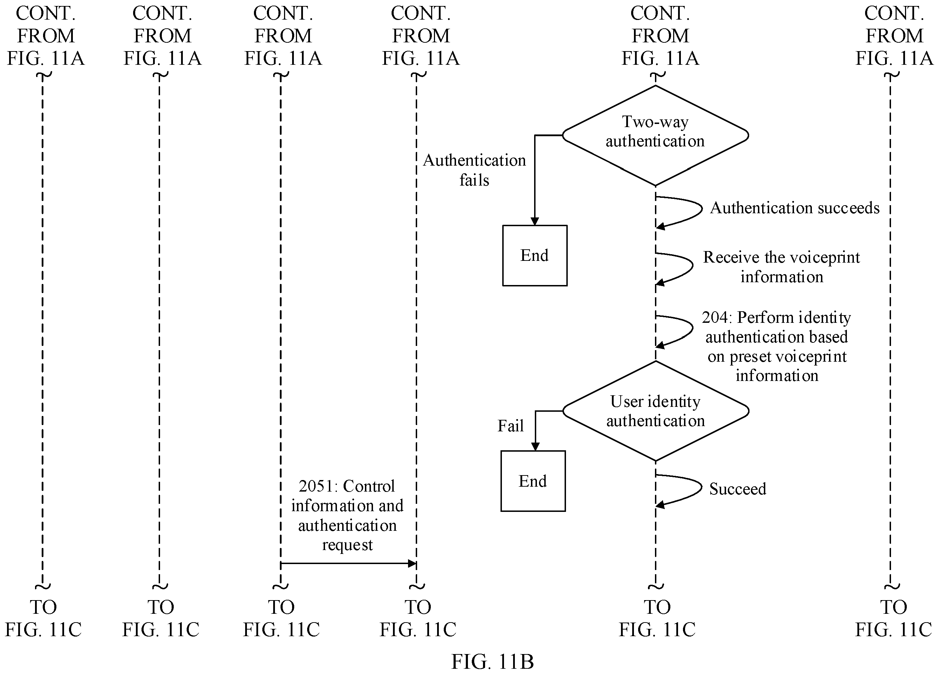

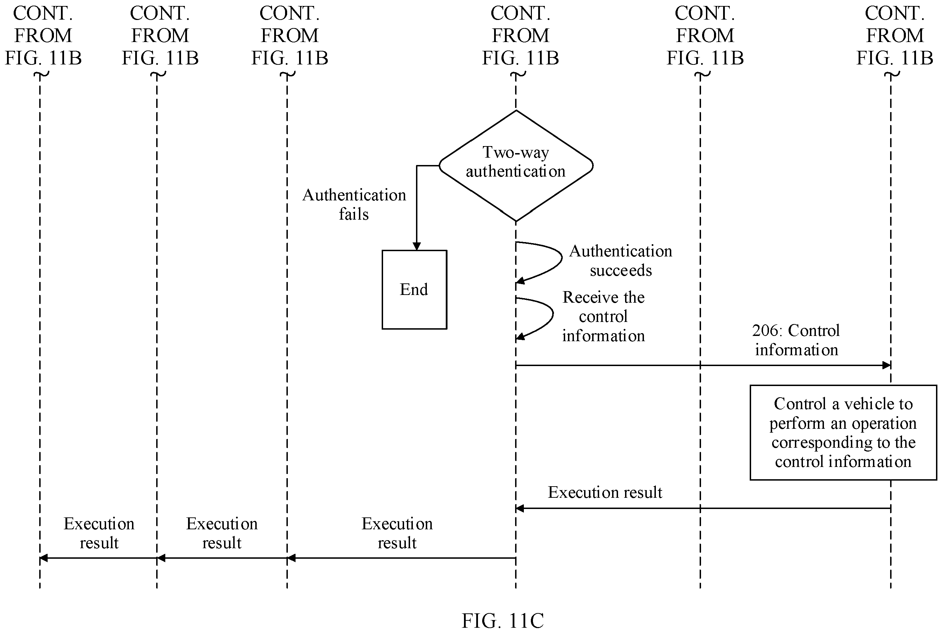

Refer to FIG. 11A to FIG. 11C. In this embodiment, step 203 in Embodiment 1 is replaced with step 2032: The mobile phone 12 forwards, to the cloud server 30, the voiceprint information sent by the Bluetooth headset 11, after two-way authentication between the mobile phone 12 and the cloud server 30 succeeds, the cloud server 30 receives the voiceprint information sent by the mobile phone 12. The two-way authentication solution is not limited, for example, AKA (Authentication and Key Agreement, authentication and key agreement) authentication.

In this embodiment, step 205 in Embodiment 1 is replaced with step 2051: The cloud server 30 determines that the user identity authentication succeeds, and the mobile phone 12 sends the control information to the vehicle 20.

The vehicle 20 receives the control information by using the vehicle-mounted T-Box 21. After two-way authentication between the mobile phone 12 and the vehicle 20 succeeds, the vehicle 20 receives, by using the vehicle-mounted T-Box 21, the control information sent by the mobile phone 12. The two-way authentication solution is not limited, for example, AKA (Authentication and Key Agreement, authentication and key agreement) authentication.

That is, the mobile phone 12 forwards only the voiceprint information to the cloud server 30, so that the cloud server 30 performs the user identity authentication. After the cloud server 30 determines that the user identity authentication succeeds, the mobile phone 12 directly sends the vehicle control information to the vehicle 20. A plurality of bodies participate in data transmission of the voiceprint information and the control information, so that data transmission security can be improved, a quantity of actions performed by the cloud server 30 can also be reduced, and a computing power requirement on the cloud server 30 can be reduced.

### Embodiment 5

This embodiment provides another vehicle control method. A difference between steps of the vehicle control method in this embodiment and those in Embodiment 1 lies in that the mobile phone 12 does not transmit both the voiceprint information and the control information of the user to the cloud server 30, but first directly transmits the voiceprint information of the user to the vehicle, and then the vehicle forwards the voiceprint information to the cloud server 30. After the cloud server 30 determines that user identity authentication succeeds, the mobile phone 12 directly transmits the control information to the vehicle. Specifically, in the vehicle control method in this embodiment, some implementation processes corresponding to step 203 and step 205 are different, and other steps are the same. Only steps different from those in Embodiment 1 in this embodiment are described in detail below. For other same steps, refer to related step descriptions in Embodiment 1. Details are not described herein again.

In step 203 in Embodiment 1, the mobile phone 12 transmits both the voiceprint information and the control information of the user to the cloud server 30, and in step 205, the cloud server 30 sends the control information to the vehicle 20.

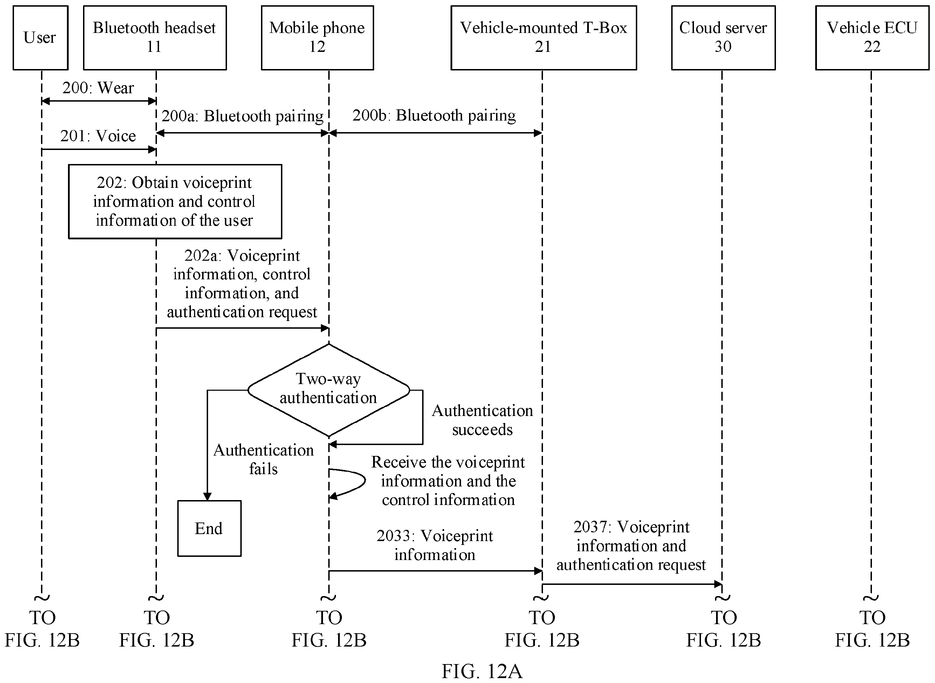

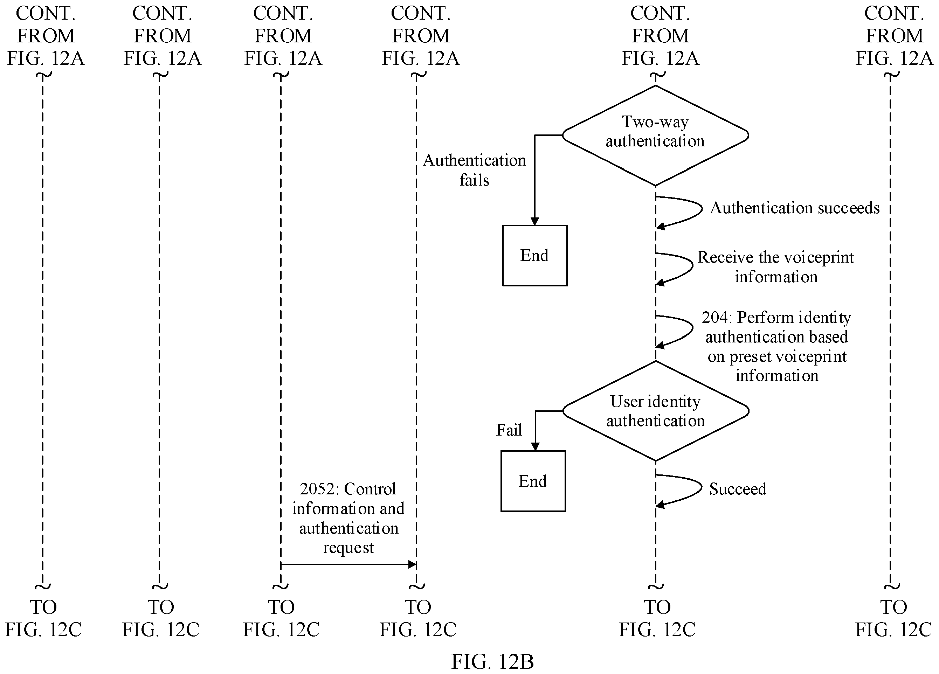

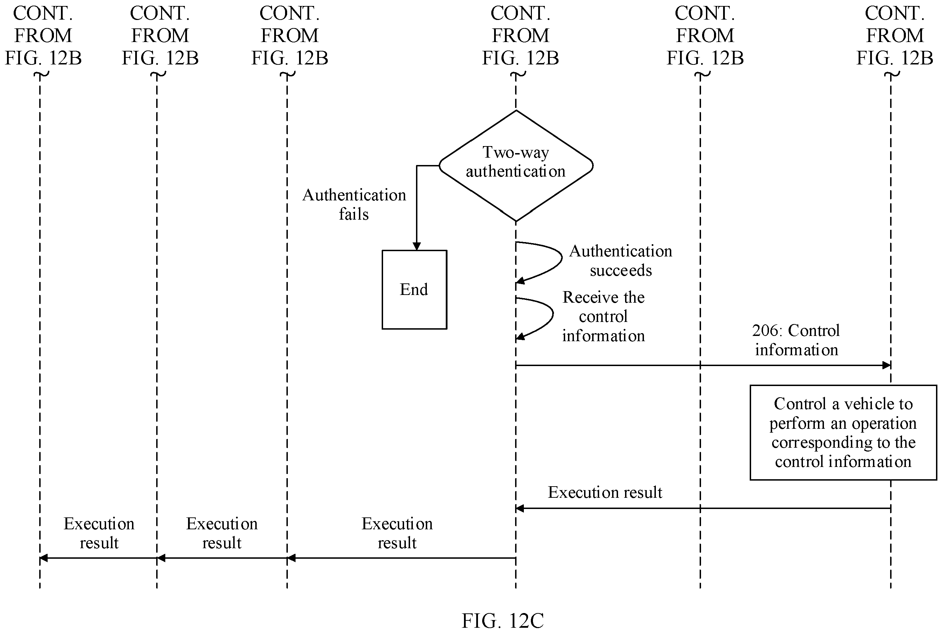

Refer to FIG. 12A to FIG. 12C. In this embodiment, step 203 in Embodiment 1 is replaced with the following steps.

Step 2033: The mobile phone 12 forwards, to the vehicle 20, the voiceprint information sent by the Bluetooth headset 11, and the vehicle 20 receives, by using the vehicle-mounted T-Box 21, the voiceprint information sent by the Bluetooth headset 11. In some possible implementations, after two-way authentication between the mobile phone 12 and the vehicle 20 succeeds, the vehicle 20 receives the voiceprint information by using the vehicle-mounted T-Box 21. The two-way authentication solution is not limited, for example, AKA (Authentication and Key Agreement, authentication and key agreement) authentication.

Step 2037: The vehicle-mounted T-Box 21 forwards, to the cloud server 30, the voiceprint information sent by the Bluetooth headset 11. After two-way authentication between the vehicle-mounted T-Box 21 and the cloud server 30 succeeds, the cloud server 30 receives the voiceprint information sent by the vehicle-mounted T-Box 21. The two-way authentication solution is not limited, for example, AKA (Authentication and Key Agreement, authentication and key agreement) authentication.

Step 205 in Embodiment 1 is replaced with step 2052: After the cloud server 30 determines that the user identity authentication succeeds, the mobile phone 12 sends the control information to the vehicle 20. The vehicle 20 receives the control information by using the vehicle-mounted T-Box 21. After two-way authentication between the mobile phone 12 and the vehicle 20 succeeds, the vehicle 20 receives, by using the vehicle-mounted T-Box 21, the control information sent by the mobile phone 12. The two-way authentication solution is not limited, for example, AKA (Authentication and Key Agreement, authentication and key agreement) authentication.

That is, in this embodiment, the vehicle-mounted T-Box 21 is used as a data forwarding unit of the voiceprint information between the mobile phone 12 and the cloud server 30. The mobile phone 12 sends the voiceprint information to the vehicle-mounted T-Box 21, and then the vehicle-mounted T-Box 21 forwards the voiceprint information to the cloud server 30. After the cloud server 30 determines that the user identity authentication succeeds, the mobile phone 12 directly sends the vehicle control information to the vehicle 20. A plurality of bodies participate in data transmission of the voiceprint information and the control information, so that data transmission security can be improved, a quantity of actions performed by the cloud server 30 can also be reduced, and a computing power requirement on the cloud server 30 can be reduced.

### Embodiment 6

This embodiment provides another vehicle control method. A difference from Embodiment 1 lies in that the Bluetooth headset 11 is used as an accessory of the mobile phone 12, and is communicatively connected to the mobile phone 12 through Bluetooth. The Bluetooth headset 11 has capabilities such as voice pickup and calculation. In an implementation process, the mobile phone 12 may not intervene in the entire process.

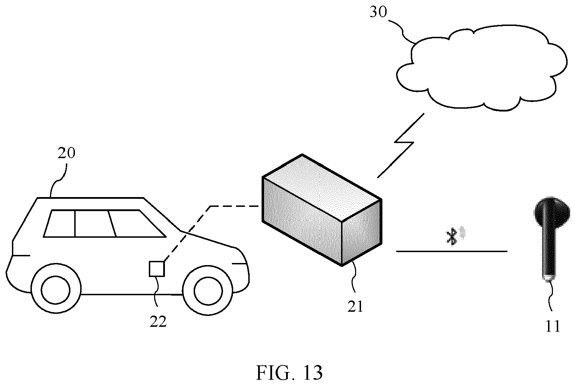

FIG. 13 is a diagram of a scenario in which vehicle control is implemented according to an embodiment. In this application scenario, the Bluetooth headset 11, the vehicle 20, and the cloud server 30 form bodies for implementing the vehicle control, and the cloud server 30 is connected to the Bluetooth headset 11 and the vehicle 20 in remote communication. The vehicle-mounted T-Box 21 of the vehicle 20 may be used as a data forwarding unit, and is configured to forward, to the cloud server 30, the voiceprint information of the user that is obtained by the Bluetooth headset 11 and the vehicle control information included in the voice.

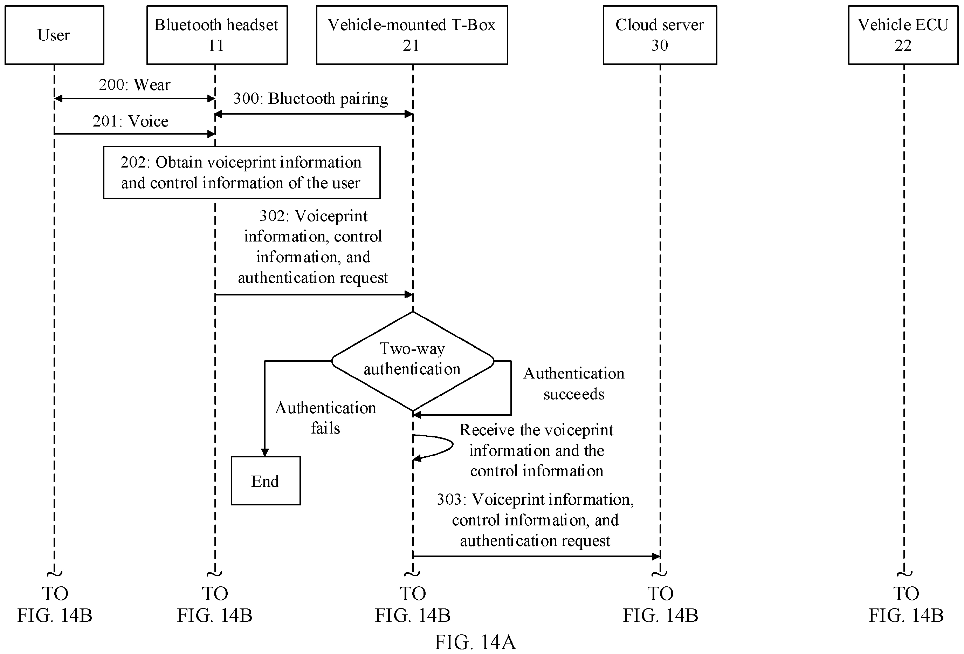

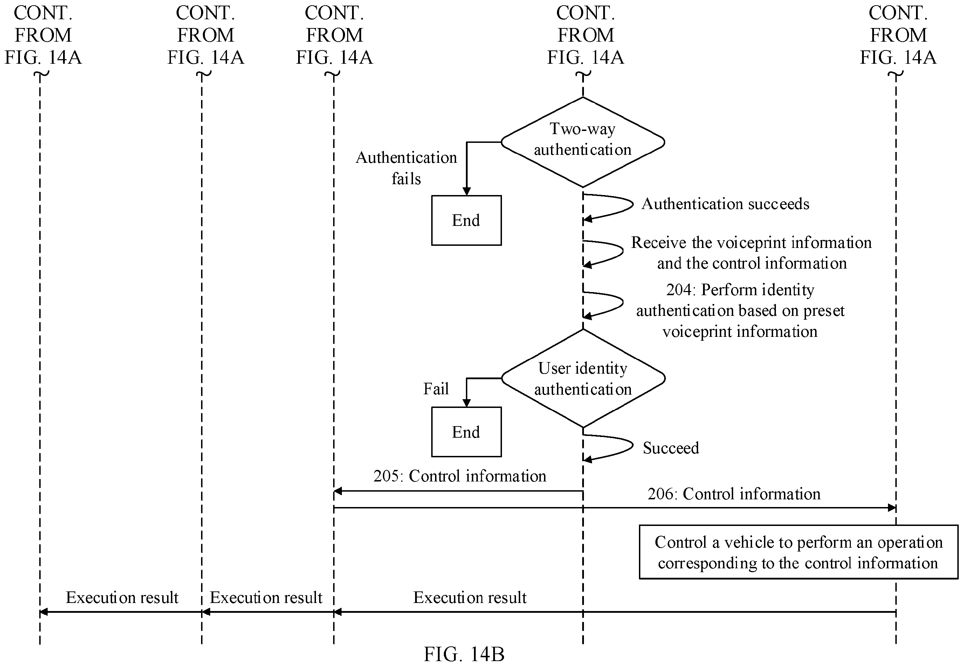

Specifically, as shown in FIG. 14A and FIG. 14B, steps of the vehicle control method in this embodiment are the same as some implementation processes corresponding to step 200, step 201, step 204, step 205, and step 206 in Embodiment 1, and some implementation processes corresponding to other steps are different. Only steps different from those in Embodiment 1 in this embodiment are described in detail below. For other same steps, refer to related step descriptions in Embodiment 1. Details are not described herein again.

In this embodiment, because the mobile phone 12 does not participate in vehicle control, step 200a and step 200b in Embodiment 1 are replaced with step 300: The Bluetooth headset 11 completes Bluetooth pairing with the vehicle-mounted T-Box 21.

The Bluetooth headset 11 and the vehicle-mounted T-Box 21 are communicatively connected through Bluetooth. Correspondingly, a type of data transmitted between the Bluetooth headset 11 and the vehicle-mounted T-Box 21 is a data packet that conforms to the Bluetooth protocol. The vehicle-mounted T-Box 21 includes a Bluetooth vehicle key module. The Bluetooth vehicle key module may implement a near-field connection between the Bluetooth headset 11 and the vehicle-mounted T-Box 21 and data transmission between the vehicle-mounted T-Box 21 and the Bluetooth headset 11.

In some possible implementations, the Bluetooth headset 11 communicates with the vehicle-mounted T-Box 21 through BLE (Bluetooth Low Energy, Bluetooth low energy), and the Bluetooth headset 11 communicates with the vehicle-mounted T-Box 21 through BLE (Bluetooth Low Energy, Bluetooth low energy). A person skilled in the art may understand that a manner of communication between the Bluetooth headset 11 and the vehicle-mounted T-Box 21 may not be limited to BLE mentioned in the foregoing embodiment, and may also be another short-range wireless communications technology, for example, including but not limited to BT (Bluetooth, Bluetooth), NFC (Near Field Communication, near field communication), FM (Frequency Modulation, frequency modulation), and IR (Infrared, infrared) communication.

In this embodiment, step 202a in embodiment 1 is replaced with step 302: The Bluetooth headset 11 transmits the voiceprint information and the control information to the vehicle 20, and the vehicle 20 receives the voiceprint information and the control information by using the vehicle-mounted T-Box 21.

In this embodiment, a method for obtaining the voiceprint information of the user by the Bluetooth headset 11 is the same as the method for obtaining the voiceprint information of the user by the Bluetooth headset 11 in step 202 in Embodiment 1. For details, refer to related descriptions in step 202 in Embodiment 1. The details are not described herein again.

In addition, the Bluetooth headset 11 transmits the voiceprint information and the control information to the vehicle-mounted T-Box 21, that is, data transmission is performed between the Bluetooth headset 11 and the vehicle-mounted T-Box 21. For data transmission security, before the vehicle-mounted T-Box 21 receives the voiceprint information and the control information that are transmitted by the Bluetooth headset 11, the Bluetooth headset 11 sends an authentication request to the vehicle-mounted T-Box 21. In this embodiment, two-way authentication between the Bluetooth headset 11 and the vehicle-mounted T-Box 21 is completed on the side of the vehicle-mounted T-Box 21. If the two-way authentication fails, data transmission between the Bluetooth headset 11 and the vehicle-mounted T-Box 21 ends. If the two-way authentication succeeds, the Bluetooth headset 11 transmits both the voiceprint information and the control information of the user to the vehicle-mounted T-Box 21 according to the Bluetooth protocol, and the vehicle-mounted T-Box 21 receives the voiceprint information and the control information that are sent by the Bluetooth headset 11. The two-way authentication solution is not limited, for example, AKA (Authentication and Key Agreement, authentication and key agreement) authentication.

In this embodiment, step 203 in Embodiment 1 is replaced with step 303: The vehicle-mounted T-Box 21 transmits both the voiceprint information and the control information of the user to the cloud server 30.

That is, as a data forwarding unit between the Bluetooth headset 11 and the cloud server 30, the vehicle-mounted T-Box 21 receives and forwards, to the cloud server 30, the voiceprint information and the control information of the user that are sent by the Bluetooth headset 11. In this way, a function of the vehicle-mounted T-Box 21 can be fully exerted, and the vehicle-mounted T-Box 21 is not only used as a communications unit for communicating with the vehicle ECU 22, but also used as the data forwarding unit, so that user experience is good.

Similarly, data transmission is performed between the vehicle-mounted T-Box 21 and the cloud server 30. For data transmission security, before the cloud server 30 receives the voiceprint information and the control information of the user that are forwarded by the vehicle-mounted T-Box 21, the vehicle-mounted T-Box 21 sends an authentication request to the cloud server 30. In this embodiment, two-way authentication between the vehicle-mounted T-Box 21 and the cloud server 30 is completed on the side of the cloud server 30. If the two-way authentication fails, data transmission between the vehicle-mounted T-Box 21 and the cloud server 30 ends. If the two-way authentication succeeds, the vehicle-mounted T-Box 21 is connected to and communicates with the cloud server 30 by using an in-vehicle WAN (Wide Area Network, wide area network) device, the vehicle-mounted T-Box 21 transmits both the voiceprint information and the control information of the user to the cloud server 30, and the cloud server 30 receives the voiceprint information and the control information that are forwarded by the vehicle-mounted T-Box 21.

It should be noted that, in this embodiment, the Bluetooth headset 11 is used as a voice pickup device. In some possible implementations, the Bluetooth headset 11 may be replaced with a mobile terminal, and functions of the Bluetooth headset 11 in this embodiment are implemented by using the mobile terminal, for example, receiving the voice of the user, obtaining the voiceprint information of the user, and obtaining, from the voice of the user through parsing, the control information included in the voice.

### Embodiment 7

This embodiment provides another vehicle control method. A difference from Embodiment 6 lies in that the Bluetooth headset 11 does not directly transmit both the voiceprint information and the control information of the user to the cloud server 30, but first transmits the voiceprint information of the user to the vehicle, and then the vehicle forwards the voiceprint information to the cloud server 30. After the cloud server 30 determines that user identity authentication succeeds, the Bluetooth headset 11 directly transmits the control information to the vehicle. Specifically, in the vehicle control method in this embodiment, some implementation processes corresponding to step 302, step 303 and step 205 are different, and other steps are the same. Only steps different from those in Embodiment 6 in this embodiment are described in detail below. For other same steps, refer to related step descriptions in Embodiment 6. Details are not described herein again.

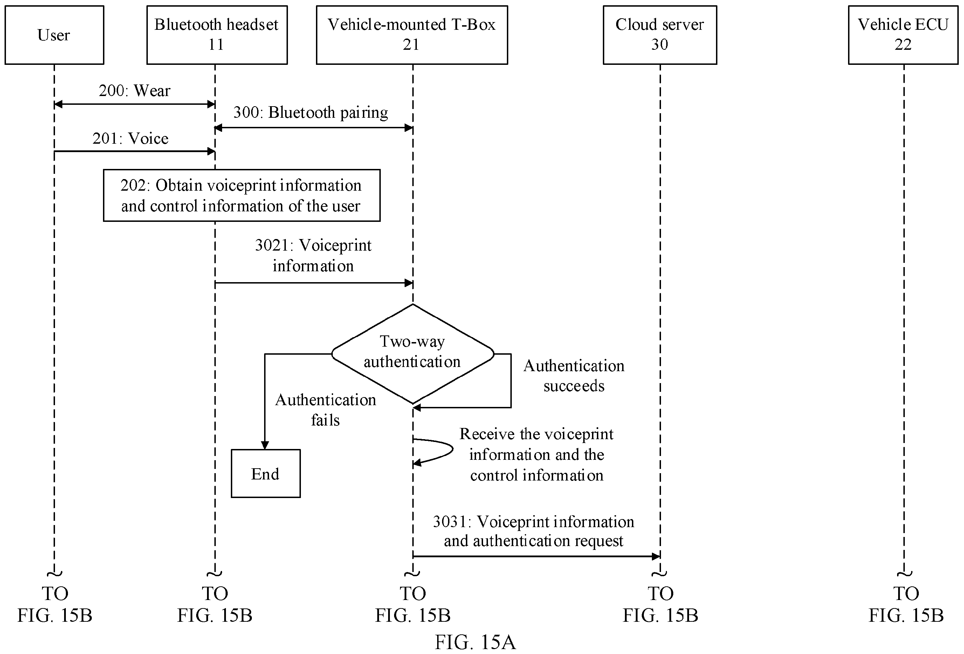

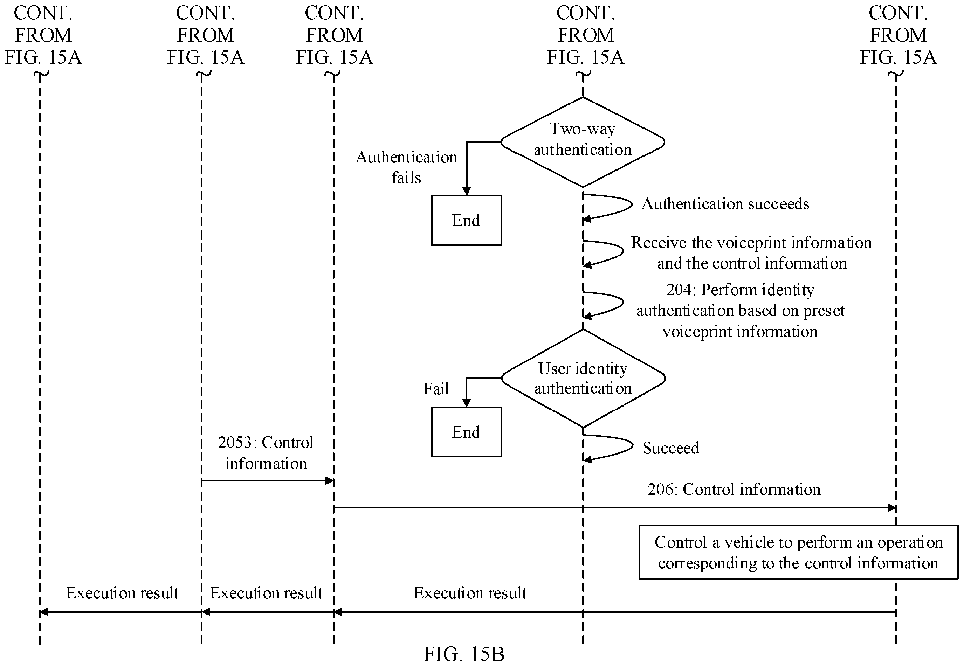

Refer to FIG. 15A and FIG. 15B. In this embodiment, step 302 in Embodiment 6 is replaced with step 3021: The Bluetooth headset 11 transmits the voiceprint information to the vehicle-mounted T-Box 21.

Step 303 in Embodiment 6 is replaced with step 3031: The vehicle-mounted T-Box 21 transmits the voiceprint information of the user to the cloud server 30.

Step 205 in Embodiment 6 is replaced with step 2053: After the cloud server 30 determines that the user identity authentication succeeds, the Bluetooth headset 11 directly sends the control information to the vehicle 20.

That is, the Bluetooth headset 11 forwards only the voiceprint information to the cloud server 30 by using the vehicle-mounted T-Box 21, so that the cloud server 30 performs the user identity authentication. After the cloud server 30 determines that the user identity authentication succeeds, the mobile phone 12 directly sends the vehicle control information to the vehicle 20, to complete the control of the vehicle 20. A plurality of bodies participate in data transmission of the voiceprint information and the control information, so that data transmission security can be improved, a quantity of actions performed by the cloud server 30 can also be reduced, and a computing power requirement on the cloud server 30 can be reduced. Similarly, in this embodiment, the Bluetooth headset 11 is used as a voice pickup device. In some possible implementations, the Bluetooth headset 11 may be replaced with a mobile terminal, and functions of the Bluetooth headset 11 in this embodiment are implemented by using the mobile terminal, for example, receiving the voice of the user, obtaining the voiceprint information of the user, and obtaining, from the voice of the user through parsing, the control information included in the voice.

### Embodiment 8

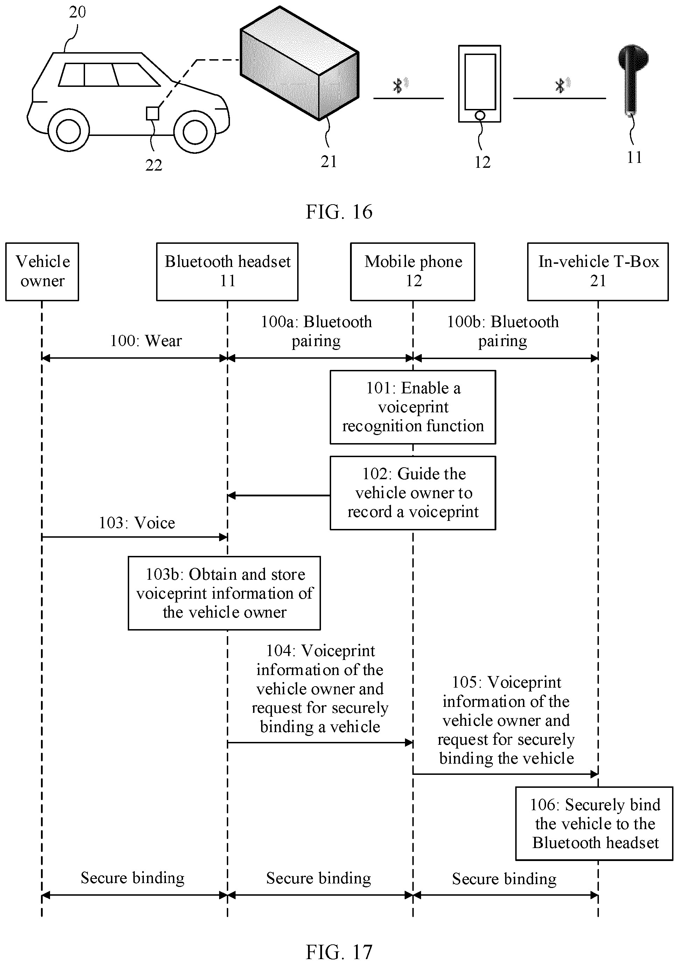

This embodiment provides another vehicle control method. A difference from Embodiment 1 lies in that, in this embodiment, the Bluetooth headset 11 is used as an authentication center, and user identity authentication is completed by using the Bluetooth headset 11. FIG. 16 is a diagram of a scenario in which vehicle control is implemented according to this embodiment. In this application scenario, the Bluetooth headset 11, the mobile phone 12, and the vehicle 20 form bodies for implementing the vehicle control, and the cloud server 30 does not participate in a vehicle control process.

Similarly, when a vehicle owner purchases a new vehicle or a second-hand vehicle, voiceprint information of the vehicle owner needs to be first recorded, and is used for user identity authentication during daily use. FIG. 17 shows a specific process of recording the voiceprint information of the vehicle owner according to some embodiments. A difference from step 103a of the process of recording the voiceprint information of the vehicle owner shown in FIG. 7 in Embodiment 1 lies in that in this embodiment, the voiceprint information of the vehicle owner is stored in the Bluetooth headset 11, that is, as shown in step 103b shown in FIG. 17 in this embodiment: Obtain the voiceprint information of the vehicle owner and store the voiceprint information locally in the Bluetooth headset 11, so that the Bluetooth headset 11 locally performs the user identity authentication. Because the cloud server 30 does not participate in the user identity authentication, the voiceprint information does not need to be uploaded to the cloud server 30. Therefore, steps 107 and 108 shown in FIG. 7 in Embodiment 1 are correspondingly omitted in this embodiment, and a remaining process of recording the voiceprint information is the same as the process shown in FIG. 7. Details are not described herein again.

After the Bluetooth headset 11 is securely bound to the vehicle-mounted T-Box 21, in a daily process of using the vehicle 20, the user may perform user identity authentication by using the Bluetooth headset 11, to control the vehicle 20.

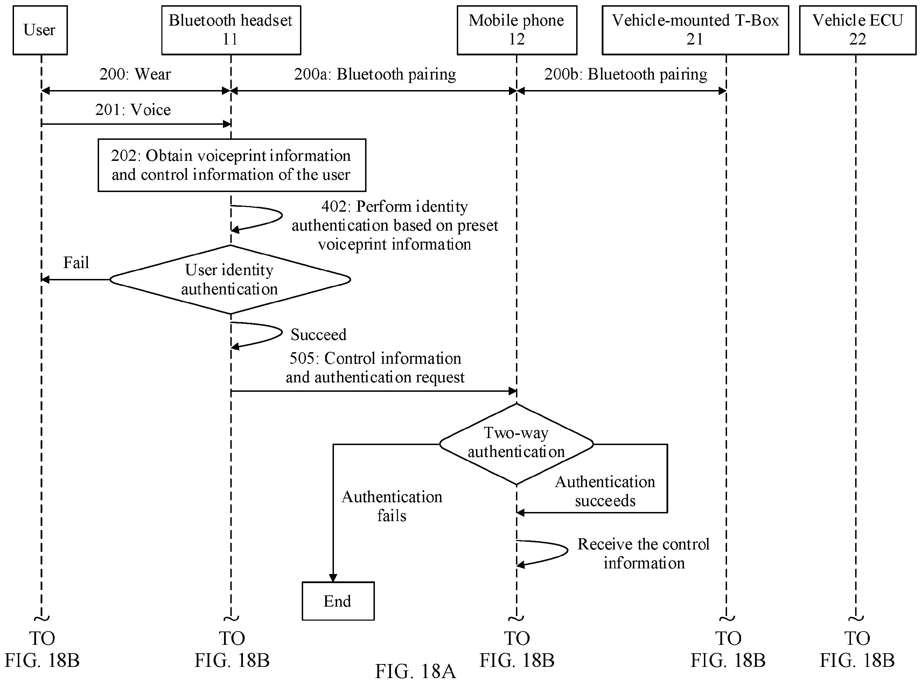

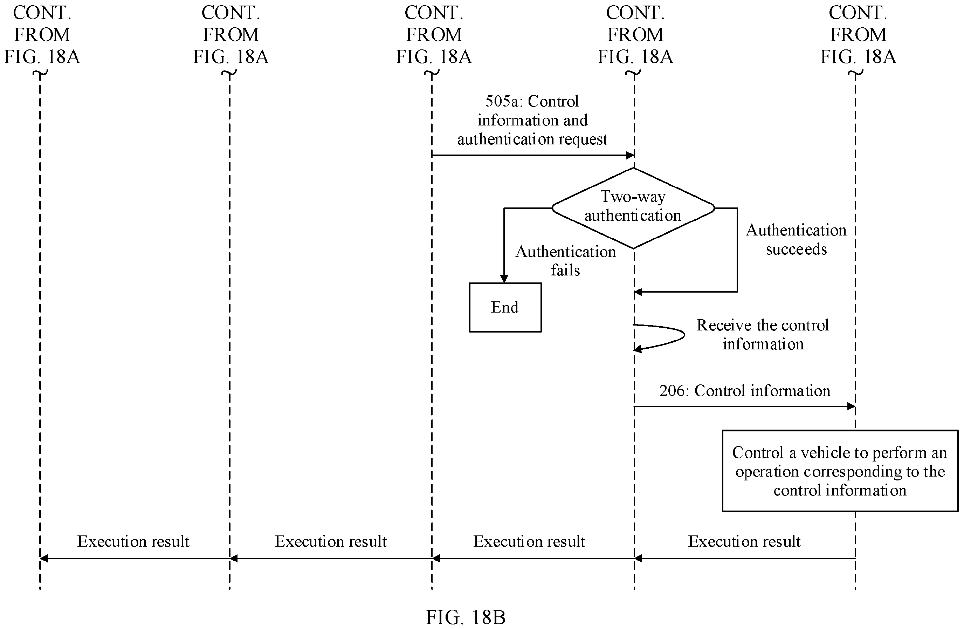

Specifically, as shown in FIG. 18A and FIG. 18B, steps of the vehicle control method in this embodiment are the same as some implementation processes corresponding to step 200, step 200a, step 200b, step 201, step 202, and step 206 in Embodiment 1, and are different from some implementation processes corresponding to step 202a and step 205. In addition, because the cloud server 30 does not participate in the vehicle control in this embodiment, some implementation processes corresponding to step 203 and step 204 in Embodiment 1 are omitted. Only steps different from those in Embodiment 1 in this embodiment are described in detail below. For other same steps, refer to related step descriptions in Embodiment 1. Details are not described herein again.

In this embodiment, step 202a in Embodiment 1 is replaced with step 402: The Bluetooth headset 11 matches the voiceprint information preset in the Bluetooth headset 11 with the obtained voiceprint information of the user, to perform the user identity authentication.

If the voiceprint information obtained by the Bluetooth headset 11 does not match the voiceprint information preset in the Bluetooth headset 11, the Bluetooth headset 11 determines that the user identity authentication fails, and a vehicle control request ends. If the voiceprint information obtained by the Bluetooth headset 11 matches the voiceprint information preset in the Bluetooth headset 11, the Bluetooth headset 11 determines that the user identity authentication succeeds, and the matching means that a similarity between the voiceprint information obtained by the Bluetooth headset 11 and the voiceprint information preset in the Bluetooth headset 11 is greater than a specified threshold. A specific value of the specified threshold is not limited, for example, 95%, 97%, 98.9%, 99%, or the like.

In some possible implementations, before the voiceprint information matching is performed, feature extraction needs to be performed on the voiceprint information, for example, extraction of a spectral feature, a prosodic feature, or the like of sound making is performed on the voiceprint information. The received voiceprint information is matched with the pre-stored voiceprint information, to determine whether the spectral feature, the prosodic feature, or the like reaches a specified threshold. A fixed phrase may be matched by using a template matching method. Alternatively, the matching may be performed based on a feature vector nearest to a pre-stored voiceprint information model by using a nearest neighbor method.

In this embodiment, step 205 in Embodiment 1 is replaced with the following steps.

Step 505: The Bluetooth headset 11 sends the control information to the mobile phone 12.

The Bluetooth headset 11 transmits the control information to the mobile phone 12, that is, data transmission is performed between the Bluetooth headset 11 and the mobile phone 12. For data transmission security, before the mobile phone 12 receives the control information transmitted by the Bluetooth headset 11, the Bluetooth headset 11 sends an authentication request to the mobile phone 12. In this embodiment, two-way authentication between the Bluetooth headset 11 and the mobile phone 12 is completed on the side of the mobile phone 12. If the two-way authentication fails, the data transmission between the Bluetooth headset 11 and the mobile phone 12 ends. If the two-way authentication succeeds, the Bluetooth headset 11 transmits the control information of the user to the mobile phone 12 according to the Bluetooth protocol, and the mobile phone 12 receives the control information sent by the Bluetooth headset 11.

Step 505a: After the mobile phone 12 receives the control information sent by the Bluetooth headset 11, the mobile phone 12 forwards the vehicle control information to the vehicle 20, and the vehicle 20 receives the control information by using the vehicle-mounted T-Box 21.

Similarly, data transmission is performed between the mobile phone 12 and the vehicle-mounted T-Box 21. For data transmission security, before the vehicle-mounted T-Box 21 receives the control information of the user that is forwarded by the mobile phone 12, the mobile phone 12 sends an authentication request to the vehicle-mounted T-Box 21. In this embodiment, two-way authentication between the mobile phone 12 and the vehicle-mounted T-Box 21 is completed on the side of the vehicle-mounted T-Box 21. If the two-way authentication fails, data transmission between the mobile phone 12 and the vehicle-mounted T-Box 21 ends. If the two-way authentication succeeds, the mobile phone 12 forwards the control information of the user to the vehicle-mounted T-Box 21 according to the Bluetooth protocol, and the vehicle-mounted T-Box 21 receives the control information forwarded by the mobile phone 12.

That is, in this embodiment, the mobile phone 12 is used as a data forwarding unit between the Bluetooth headset 11 and the vehicle-mounted T-Box 21. The Bluetooth headset 11 locally performs user identity authentication based on the voiceprint information obtained by the Bluetooth headset 11. After the user identity authentication succeeds, the Bluetooth headset 11 sends the control information to the vehicle 20 by using the mobile phone 12, so that the vehicle 20 completes an operation corresponding to the vehicle control information. In this embodiment, the identity authentication is directly performed locally on the Bluetooth headset 11, and the identity authentication does not need to be performed by using the cloud server 30, so that costs are low. In addition, functions of the Bluetooth headset 11 are integrated, and user experience is good.

### Embodiment 9

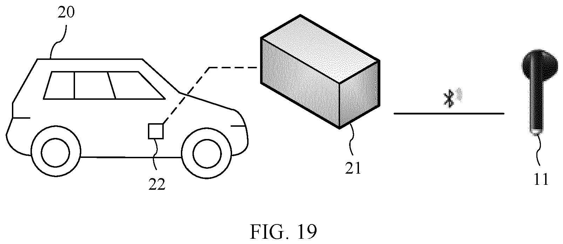

This embodiment provides another vehicle control method. A difference from Embodiment 8 lies in that the Bluetooth headset 11 is used as an accessory of the mobile phone 12, and is communicatively connected to the mobile phone 12 through Bluetooth. The Bluetooth headset 11 has capabilities such as voice pickup and calculation. In an implementation process, the mobile phone 12 may not intervene in the entire process. FIG. 19 is a diagram of a scenario in which vehicle control is implemented according to this embodiment. In this application scenario, the Bluetooth headset 11 and the vehicle 20 form bodies for implementing the vehicle control, and the mobile phone 12 does not participate in a vehicle control process.

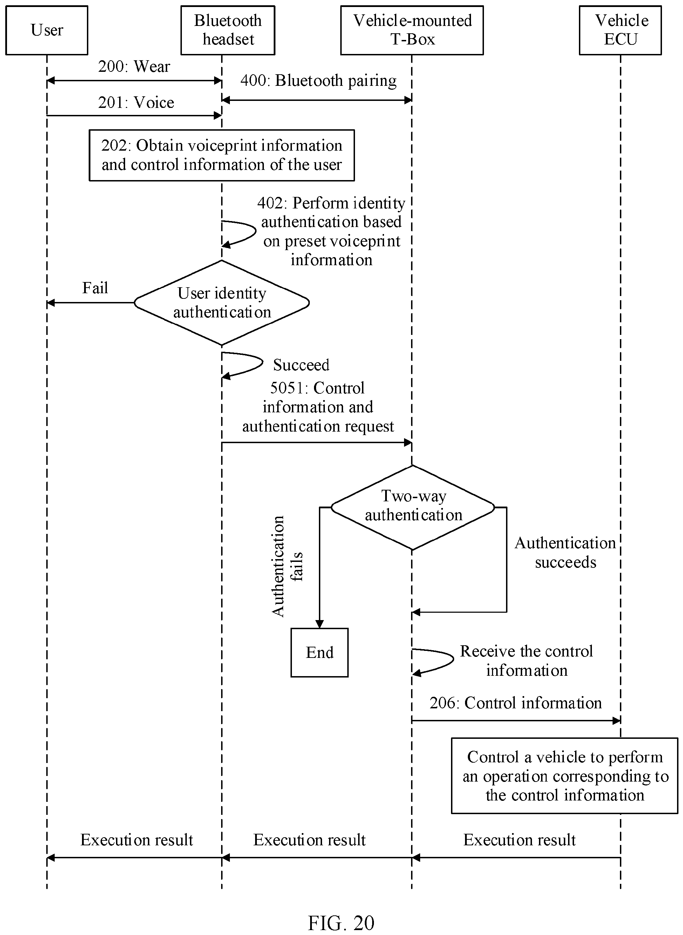

Specifically, as shown in FIG. 20, steps of the vehicle control method in this embodiment are different from some implementation processes corresponding to step 200a, step 200b, step 505, and step 505a in Embodiment 8, and other steps are the same. Only steps different from those in Embodiment 8 in this embodiment are described in detail below. For other same steps, refer to related step descriptions in Embodiment 8. Details are not described herein again.

In this embodiment, because the mobile phone 12 does not participate in vehicle control, step 200a and step 200b in Embodiment 8 are replaced with step 400: The Bluetooth headset 11 completes Bluetooth pairing with the vehicle-mounted T-Box 21.

For a specific connection relationship between the Bluetooth headset 11 and the vehicle-mounted T-Box 21 in this embodiment, refer to related descriptions of step 300 in Embodiment 6. Details are not described herein again.

In this embodiment, because the mobile phone 12 does not participate in the vehicle control as a data forwarding unit, step 505 and step 505a in Embodiment 8 are replaced with step 5051: The Bluetooth headset 11 sends the control information to the vehicle 20.

The Bluetooth headset 11 sends the vehicle control information to the vehicle 20, and the vehicle 20 receives the control information by using the vehicle-mounted T-Box 21. Data transmission is performed between the Bluetooth headset 11 and the vehicle-mounted T-Box 21. For data transmission security, before the vehicle-mounted T-Box 21 receives the control information of the user that is sent by the Bluetooth headset 11, the Bluetooth headset 11 sends an authentication request to the vehicle-mounted T-Box 21. In this embodiment, two-way authentication between the Bluetooth headset 11 and the vehicle-mounted T-Box 21 is completed on the side of the vehicle-mounted T-Box 21. If the two-way authentication fails, data transmission between the Bluetooth headset 11 and the vehicle-mounted T-Box 21 ends. If the two-way authentication succeeds, the Bluetooth headset 11 sends the control information of the user to the vehicle-mounted T-Box 21 according to the Bluetooth protocol, and the vehicle-mounted T-Box 21 receives the control information sent by the Bluetooth headset 11.

That is, the Bluetooth headset 11 locally performs user identity authentication based on the voiceprint information obtained by the Bluetooth headset 11. After the user identity authentication succeeds, the Bluetooth headset 11 directly sends the control information to the vehicle 20, and does not need to forward the vehicle control information to the vehicle 20 by using the mobile phone 12, so that the vehicle 20 completes an operation corresponding to the vehicle control information. After such setting, the identity authentication is directly performed locally on the Bluetooth headset 11, and the identity authentication does not need to be performed by using the cloud server 30, so that costs are low. In addition, functions of the Bluetooth headset 11 are integrated, and data forwarding does not need to be performed by using the mobile phone 12. Even if the user does not bring the mobile phone 12, the user may directly implement the vehicle control by using the Bluetooth headset 11, and user experience is good.

It should be noted that, in this embodiment, the Bluetooth headset 11 is used as a voice pickup device. In some possible implementations, the Bluetooth headset 11 may be replaced with a mobile terminal, and the functions of the Bluetooth headset 11 in this embodiment are implemented by using the mobile terminal, for example, receiving the voice of the user, obtaining the voiceprint information of the user, obtaining, from the voice of the user through parsing, the control information included in the voice, and performing the user identity authentication.

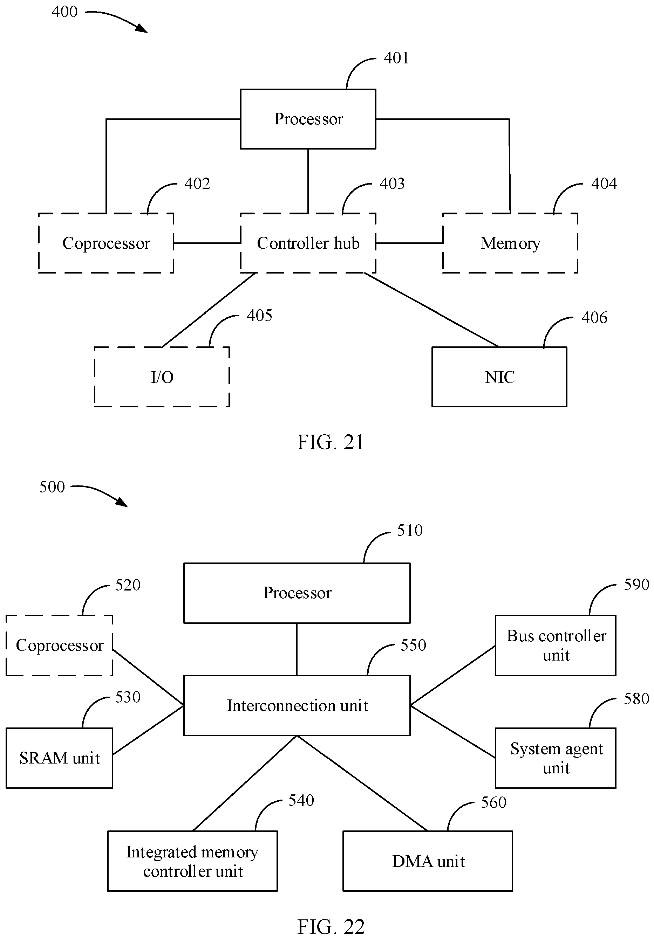

FIG. 21 shows a block diagram of an electronic device 400 according to an embodiment of this application. The electronic device 400 may include one or more processors 401 coupled to a controller hub 403. For at least one embodiment, the controller hub 403 communicates with the processor 401 by using a multi-branch bus such as a front side bus (FSB, Front Side Bus), a point-to-point interface such as a quick path interconnect (QPI, Quick Path Interconnect) interface, or a similar connection 406. The processor 401 executes instructions for controlling a general type of data processing operation. In an embodiment, the controller hub 403 includes, but is not limited to, a graphics memory controller hub (GMCH, Graphics & Memory Controller Hub) (not shown) and an input/output hub (IOH, Input Output Hub) (which may be on a separate chip) (not shown). The GMCH includes a memory and a graphics controller, and is coupled to the IOH.

The electronic device 400 may further include a coprocessor 402 and a memory 404 that are coupled to the controller hub 403. Alternatively, one or both of the memory and the GMCH may be integrated into the processor (as described in this application). The memory 404 and the coprocessor 402 are directly coupled to the processor 401 and the controller hub 403. The controller hub 403 and the IOH are located in a single chip.

The memory 404 may be, for example, a dynamic random access memory (DRAM, Dynamic Random Access Memory), a phase change memory (PCM, Phase Change Memory), or a combination of both. The memory 404 may include one or more tangible and non-transitory computer-readable media that are configured to store data and/or instructions. The computer-readable storage medium stores instructions, and specifically, stores temporary and permanent copies of the instructions. The instructions may include an instruction that enables, when the instruction is executed by at least one of the processors, the electronic device 400 to implement the methods shown in FIG. 8A to FIG. 8C, FIG. 9A to FIG. 9C, FIG. 10A to FIG. 10C, FIG. 11A to FIG. 11C, FIG. 12A to FIG. 12C, FIG. 14A and FIG. 14B, FIG. 15A and FIG. 15B, FIG. 18A and FIG. 18B, and FIG. 20. When the instructions are run on a computer, the computer is enabled to perform the method disclosed in any one or a combination of Embodiment 1 to Embodiment 9.

In an embodiment, the coprocessor 402 is a dedicated processor, for example, a high-throughput MIC (Many Integrated Core, many integrated core) processor, a network or communication processor, a compression engine, a graphics processor, a GPGPU (General-purpose computing on a graphics processing unit, general-purpose computing on a graphics processing unit), or an embedded processor. An optional property of the coprocessor 402 is shown in FIG. 21 in dashed lines.

In an embodiment, the electronic device 400 may further include a network interface (NIC, Network Interface Controller) 406. The network interface 406 may include a transceiver, configured to provide a radio interface for the electronic device 400, to communicate with any another suitable device (such as a front-end module or an antenna). In various embodiments, the network interface 406 may be integrated with another component of the electronic device 400. The network interface 406 may implement a function of the communications unit in the foregoing embodiment.

The electronic device 400 may further include an input/output (I/O, Input/Output) device 405. The I/O 405 may include: a user interface, where this design enables a user to interact with the electronic device 400; a peripheral component interface, where this design enables the peripheral component to interact with the electronic device 400; and/or a sensor, where this sensor is configured to determine an environmental condition and/or location information related to the electronic device 400.

It should be noted that FIG. 21 is merely an example. To be specific, although FIG. 21 shows that the electronic device 400 includes a plurality of components such as the processor 401, the controller hub 403, and the memory 404, in actual application, a device using the methods in this application may include only some of the components of the electronic device 400, for example, may only include the processor 401 and the network interface 406. In FIG. 21, properties of the optional components are shown by using dashed lines.

FIG. 22 shows a block diagram of a SoC (System on Chip, system on chip) 500 according to an embodiment of this application. In FIG. 22, similar parts have a same reference numeral. In addition, a dashed-line box is an optional feature of a more advanced SoC. In FIG. 22, the SoC 500 includes: an interconnection unit 550 coupled to a processor 510; a system agent unit 580; a bus controller unit 590; an integrated memory controller unit 540; one group of or one or more coprocessors 520 that may include integrated graphics logic, an image processor, an audio processor, and a video processor; a static random access memory (SRAM, Static Random Access Memory) unit 530; and a direct memory access (DMA, Direct Memory Access) unit 560. In an embodiment, the coprocessor 520 includes a dedicated processor, for example, a network or communication processor, a compression engine, a GPGPU (General-purpose computing on a graphics processing unit, general-purpose computing on a graphics processing unit), a high-throughput MIC processor, or an embedded processor.

The static random access memory (SRAM) unit 530 may include one or more tangible and non-transitory computer-readable media that are configured to store data and/or instructions. The computer-readable storage medium stores instructions, and specifically, stores temporary and permanent copies of the instructions. The instructions may include an instruction that enables, when the instruction is executed by at least one of the processors, the SoC to implement the methods shown in FIG. 8A to FIG. 8C, FIG. 9A to FIG. 9C, FIG. 10A to FIG. 10C, FIG. 11A to FIG. 11C, FIG. 12A to FIG. 12C, FIG. 14A and FIG. 14B, FIG. 15A and FIG. 15B, FIG. 18A and FIG. 18B, and FIG. 20. When the instructions are run on a computer, the computer is enabled to perform the method disclosed in any one of Embodiment 1 to Embodiment 9.

All method implementations of this application may be implemented by software, a magnetic component, firmware, or the like.

Program code may be used to input instructions, to perform functions described in this specification and generate output information. The output information may be applied to one or more output devices in a known manner. For a purpose of this application, a processing system includes any system having a processor such as a digital signal processor (DSP, Digital Signal Processor), a microcontroller, an application-specific integrated circuit (ASIC), or a microprocessor.

The program code may be implemented in a high-level procedural language or an object-oriented programming language, to communicate with the processing system. The program code may alternatively be implemented by using an assembly language or a machine language when needed. Actually, the mechanism described in this specification is not limited to a scope of any particular programming language. In any case, the language may be a compiled language or an interpretive language.

One or more aspects of at least one embodiment may be implemented by expressive instructions stored in a computer-readable storage medium. The instructions represent various types of logic in a processor, and when the instructions are read by a machine, the machine is enabled to make logic for performing the technologies described herein. These representations referred to as "IP (Intellectual Property, intellectual property) cores" may be stored in a tangible computer-readable storage medium and provided to a plurality of customers or production facilities for loading into a manufacturing machine that actually manufactures the logic or the processor.

In some cases, an instruction converter may be configured to convert instructions from a source instruction set to a target instruction set. For example, the instruction converter may convert, in a transform (for example, a static binary transform, or a dynamic binary transform including dynamic compilation), morphing, emulation, or another manner, the instructions into one or more other instructions processed by a core. The instruction converter may be implemented by software, hardware, firmware, or a combination thereof. The instruction converter may be located on the processor, outside the processor, or partially on the processor and partially outside the processor.

## Claims

1. A device control method, wherein the method is applied to a system comprising a first device and a second device that are communicatively connected, the second device comprises a communications unit and a control unit, and the method comprises:
receiving, by the first device, a voice of a user and obtaining voiceprint information of the user, and obtaining, by the first device from the voice through parsing, control information comprised in the voice;
matching, by the first device, the voiceprint information with voiceprint information preset in the first device, to perform user identity authentication;
determining, by the first device, that the user identity authentication succeeds, and sending the control information to the second device;
receiving, by the second device, the control information by using the communications unit, and forwarding, by the communications unit, the control information to the control unit of the second device; and
controlling, by the control unit of the second device, the second device to perform an operation corresponding to the control information.

2. The device control method according to claim 1, wherein the first device is a Bluetooth headset or a mobile terminal, and the second device is a vehicle; and in the second device, the communications unit is a vehicle-mounted T-Box, and the control unit is a vehicle ECU.

3. The device control method according to claim 1, wherein the first device comprises a Bluetooth headset and a mobile terminal communicatively connected to the Bluetooth headset, and the second device is a vehicle; and in the second device, the communications unit is a vehicle-mounted T-Box, and the control unit is a vehicle ECU.

4. The device control method according to claim 3, wherein
the Bluetooth headset comprised in the first device receives the voice of the user, and obtains, from the voice through parsing, the control information comprised in the voice;
the Bluetooth headset matches the obtained voiceprint information of the user with the voiceprint information preset in the Bluetooth headset, to perform the user identity authentication; and
the Bluetooth headset determines that the user identity authentication succeeds, and sends the control information to the mobile terminal, and the mobile terminal forwards the control information to the second device.

5. The device control method according to claim 2 or 3, wherein the operation performed by the second device based on the control information comprises: vehicle unlocking, vehicle locking, vehicle startup, vehicle window opening, vehicle window closing, air conditioner on, air conditioner off, seat height raising, seat height descending, trunk opening, and trunk closing.

6. The device control method according to claim 1, wherein when the voiceprint information matches the voiceprint information preset in the first device, the first device determines that the user identity authentication succeeds, wherein the matching means that a similarity between the voiceprint information and the voiceprint information preset in the first device is greater than a specified threshold.

7. A device control method, wherein the method is applied to a system comprising a first device, a second device, and a third device remotely communicatively connected to the first device and the second device, the second device comprises a communications unit and a control unit, and the method comprises:
receiving, by the first device, a voice of a user, obtaining voiceprint information of the user, and transmitting the voiceprint information to the third device, and obtaining, by the first device from the voice through parsing, control information comprised in the voice;
receiving, by the third device, the voiceprint information, and matching the voiceprint information with voiceprint information preset in the third device, to perform user identity authentication;
determining, by the third device, that the user identity authentication succeeds, and receiving, by the second device, the control information;
receiving, by the second device, the control information by using the communications unit, and forwarding, by the communications unit, the control information to the control unit of the second device; and
controlling, by the control unit of the second device, the second device to perform an operation corresponding to the control information.

8. The device control method according to claim 7, wherein the first device is a Bluetooth headset or a mobile terminal, the second device is a vehicle, and the third device is a cloud server; and in the second device, the communications unit is a vehicle-mounted T-Box, and the control unit is a vehicle ECU.

9. The device control method according to claim 8, wherein
the Bluetooth headset or the mobile terminal receives the voice of the user, the Bluetooth headset or the mobile terminal obtains, from the voice through parsing, the control information comprised in the voice, and the Bluetooth headset or the mobile terminal transmits the voiceprint information and the control information to the second device;
the second device receives the voiceprint information and the control information by using the vehicle-mounted T-Box, and the vehicle-mounted T-Box forwards the voiceprint information and the control information to the cloud server;
the cloud server matches the voiceprint information with the voiceprint information preset in the cloud server, to perform the user identity authentication; and
the cloud server determines that the user identity authentication succeeds, and sends the control information to the second device.

10. The device control method according to claim 8, wherein
the Bluetooth headset or the mobile terminal receives the voice of the user, the Bluetooth headset or the mobile terminal obtains, from the voice through parsing, the control information comprised in the voice, and the Bluetooth headset or the mobile terminal transmits the voiceprint information to the second device;
the second device receives the voiceprint information by using the vehicle-mounted T-Box, and the vehicle-mounted T-Box forwards the voiceprint information to the cloud server;
the cloud server matches the voiceprint information with the voiceprint information preset in the cloud server, to perform the user identity authentication; and
the cloud server determines that the user identity authentication succeeds, and the Bluetooth headset or the mobile terminal sends the control information to the second device.

11. The device control method according to claim 7, wherein the first device comprises a Bluetooth headset and a mobile terminal communicatively connected to the Bluetooth headset, the second device is a vehicle, and the third device is a cloud server; and in the second device, the communications unit is a vehicle-mounted T-Box, and the control unit is a vehicle ECU.

12. The device control method according to claim 11, wherein
the Bluetooth headset comprised in the first device receives the voice of the user, and obtains, from the voice through parsing, the control information comprised in the voice, and the Bluetooth headset transmits the voiceprint information and the control information to the mobile terminal;
the mobile terminal forwards the voiceprint information and the control information to the cloud server;
the cloud server matches the voiceprint information with the voiceprint information preset in the cloud server, to perform the user identity authentication; and
the cloud server determines that the user identity authentication succeeds, and sends the control information to the second device.

13. The device control method according to claim 11, wherein
the Bluetooth headset comprised in the first device receives the voice of the user, and obtains, from the voice through parsing, the control information comprised in the voice, and the Bluetooth headset transmits the voiceprint information and the control information to the mobile terminal;
the mobile terminal forwards the voiceprint information and the control information to the second device;
the second device receives the voiceprint information and the control information by using the vehicle-mounted T-Box, and the vehicle-mounted T-Box forwards the voiceprint information and the control information to the cloud server;
the cloud server matches the voiceprint information with the voiceprint information preset in the cloud server, to perform the user identity authentication; and
the cloud server determines that the user identity authentication succeeds, and sends the control information to the second device.

14. The device control method according to claim 11, wherein
the Bluetooth headset comprised in the first device receives the voice of the user, and obtains, from the voice through parsing, the control information comprised in the voice, and the Bluetooth headset transmits the voiceprint information and the control information to the mobile terminal;
the mobile terminal forwards the voiceprint information to the cloud server;
the cloud server matches the voiceprint information with the voiceprint information preset in the cloud server, to perform the user identity authentication; and
the cloud server determines that the user identity authentication succeeds, and the mobile terminal sends the control information to the second device.

15. The device control method according to claim 11, wherein
the Bluetooth headset comprised in the first device receives the voice of the user, and obtains, from the voice through parsing, the control information comprised in the voice, and the Bluetooth headset transmits the voiceprint information and the control information to the mobile terminal;
the mobile terminal forwards the voiceprint information to the second device;
the second device receives the voiceprint information by using the vehicle-mounted T-Box, and the vehicle-mounted T-Box forwards the voiceprint information to the cloud server;
the cloud server matches the voiceprint information with the voiceprint information preset in the cloud server, to perform the user identity authentication; and
the cloud server determines that the user identity authentication succeeds, and the mobile terminal sends the control information to the second device.

16. The device control method according to claim 11, wherein
the Bluetooth headset comprised in the first device receives the voice of the user, and obtains, from the voice through parsing, the control information comprised in the voice, and the Bluetooth headset transmits the voiceprint information and the control information to the mobile terminal;
the mobile terminal forwards the voiceprint information to the cloud server, and the mobile terminal forwards the control information to the second device;
the second device receives the control information by using the vehicle-mounted T-Box, and the vehicle-mounted T-Box forwards the control information to the cloud server;
the cloud server matches the voiceprint information with the voiceprint information preset in the cloud server, to perform the user identity authentication; and
the cloud server determines that the user identity authentication succeeds, and sends the control information to the second device.

17. The device control method according to claim 8 or 11, wherein the operation performed by the second device based on the control information comprises: vehicle unlocking, vehicle locking, vehicle startup, vehicle window opening, vehicle window closing, air conditioner on, air conditioner off, seat height raising, seat height descending, trunk opening, and trunk closing.

18. The device control method according to claim 7, wherein when the voiceprint information comprised in the voice matches the voiceprint information preset in the third device, the third device determines that the user identity authentication succeeds, wherein the matching means that a similarity between the voiceprint information and the voiceprint information preset in the third device is greater than a specified threshold.

19. A computer-readable storage medium, wherein the computer-readable storage medium stores instructions, and when the instructions are executed on a computer, the computer is enabled to perform the method according to any one of claims 1 to 18.
